# EUROPEAN PATENT APPLICATION

(11) **EP 3 319 164 A1**
(43) Date of publication of application: **09.05.2018**
(21) Application number: 16821100.1
(22) Date of filing: 18.05.2016
(51) Int. Cl.: H01M 10/0569, H01G 11/20, H01G 11/58, H01M 10/054, H01M 10/0568

(54) **ELECTROLYTE AND ELECTROCHEMICAL DEVICE**

(30) Priority: 03.07.2015 JP 2015134329
(71) Applicant: Murata Manufacturing Co., Ltd., Nagaokakyo-shi, Kyoto 617-8555 (JP)
(72) Inventor: MATSUMOTO Ryuhei, Tokyo 108-0075 (JP); NAKAYAMA Yuri, Tokyo 108-0075 (JP); KUBOTA Tadahiko, Tokyo 108-0075 (JP)
(74) Representative: Witte, Weller & Partner Patentanwälte mbB
(86) International application number: PCT/JP2016/064727
(87) International publication number: WO 2017/006629

(57) **Abstract**

An electrolytic solution is an electrolytic solution for an electrochemical device including a negative electrode including a magnesium-based material, and has a moisture content of more than 10 ppm and less than 500 ppm. The electrochemical device including a negative electrode including a magnesium-based material includes an electrolytic solution having a moisture content of more than 10 ppm and less than 500 ppm.

## Description

### TECHNICAL FIELD

The present disclosure relates to an electrolytic solution and an electrochemical device.

### BACKGROUND ART

Magnesium used in a magnesium battery is more abundant in terms of resource and much more inexpensive, and has a larger amount of electricity per unit volume that can be taken out by an oxidation-reduction reaction and higher safety in a case where magnesium is used for a battery than lithium. Therefore, a magnesium battery is attracting attention as a next-generation secondary battery used in place of a lithium ion battery.

By the way, a moisture content of an electrolytic solution is an important factor determining a characteristic of a nonaqueous secondary battery represented by a lithium ion secondary battery. In addition, it is said that a battery characteristic is deteriorated by moisture contamination. Therefore, the moisture content in an electrolytic solution is controlled to 10 ppm or less, for example (see, for example, Japanese Patent Application Laid-Open No. 2009-054462).

### CITATION LIST

### PATENT DOCUMENT

Patent Document 1: Japanese Patent Application Laid-Open No. 2009-054462

### SUMMARY OF THE INVENTION

### PROBLEMS TO BE SOLVED BY THE INVENTION

However, in order to control the moisture content in the electrolytic solution to an extremely low value in this way, it is necessary to use super dehydration type substances for a solvent, various salts as solutes, and various additives, for example. Furthermore, it is necessary to use a dry room, a glove box of an argon gas atmosphere, or the like for storage or a manufacturing line, leading to an increase in manufacturing cost of the electrolytic solution and an electrochemical device.

Therefore, an object of the present disclosure is to provide an electrolytic solution capable of suppressing an increase in manufacturing cost, and an electrochemical device using such an electrolytic solution.

### SOLUTIONS TO PROBLEMS

The electrolytic solution of the present disclosure for achieving the above object is an electrolytic solution for an electrochemical device including a negative electrode including a magnesium-based material, and has a moisture content of more than 10 ppm and less than 500 ppm, preferably more than 10 ppm and 400 ppm or less, more preferably more than 10 ppm and 300 ppm or less.

An electrochemical device (or a secondary battery) for achieving the above object is an electrochemical device (or a secondary battery) including a negative electrode including a magnesium-based material, and includes an electrolytic solution having a moisture content of more than 10 ppm and less than 500 ppm, preferably more than 10 ppm and 400 ppm or less, more preferably more than 10 ppm and 300 ppm or less.

### EFFECTS OF THE INVENTION

The electrolytic solution of the present disclosure or an electrolytic solution constituting the electrochemical device (or secondary battery) of the present disclosure has a moisture content of more than 10 ppm and less than 500 ppm. Therefore, the electrolytic solution does not require super dehydration type substances for various materials constituting the electrolytic solution, does not require special storage or manufacturing line, and can suppress an increase in manufacturing cost of the electrolytic solution or the electrochemical device. In addition, by using this excellent electrolytic solution for an electrolyte layer, a high-performance electrochemical device such as a magnesium battery can be realized. Incidentally, effects described herein are merely illustrative, and are not restrictive, and an additional effect may be present.

### BRIEF DESCRIPTION OF DRAWINGS

Fig. 1 is a schematic exploded view of an electrochemical device (battery) of Example 1.
Fig. 2 is a graph obtained by plotting a discharge capacity retention ratio at a fifth cycle of a charge/discharge cycle in a magnesium secondary battery based on electrolytic solutions having various moisture contents in Example 1.
Fig. 3 is a graph obtained by plotting a discharge capacity retention ratio at a fifth cycle of a charge/discharge cycle in a magnesium secondary battery based on electrolytic solutions having various moisture contents in Example 3.
Fig. 4 is a schematic cross-sectional view of an electrochemical device (capacitor) of Example 4.
Fig. 5 is a conceptual diagram of an electrochemical device (air battery) of Example 4.
Fig. 6 is a conceptual diagram of an electrochemical device (fuel battery) of Example 4.
Fig. 7 is a conceptual diagram of an electrochemical device (battery) of the present disclosure.
Fig. 8 is a schematic cross-sectional view of a magnesium secondary battery (cylinder type magnesium secondary battery) in Example 5.
Fig. 9 is a schematic cross-sectional view of a magnesium secondary battery (flat plate type laminated film type magnesium secondary battery) in Example 5.
Fig. 10 is a block diagram illustrating a circuit configuration example in a case where each of the magnesium secondary batteries described in Examples 1 to 3 in the present disclosure is applied to a battery pack.
Figs. 11A, 11B, and 11C are a block diagram illustrating a configuration of an application example (electric vehicle) of the present disclosure in Example 5, an application example (power storage system) of the present disclosure in Example 5, and a block diagram illustrating a configuration of an application example (electric tool) of the present disclosure in Example 5, respectively

### MODES FOR CARRYING OUT THE INVENTION

Hereinafter, the present disclosure will be described on the basis of Examples with reference to the drawings. However, the present disclosure is not limited to Examples, but various numerical values and materials in Examples are illustrative. Incidentally, description will be made in the following order.
1. General description of electrolytic solution and electrochemical device of the present disclosure
2. Example 1 (electrolytic solution and electrochemical device of the present disclosure, and electrolytic solution according to a first mode of the present disclosure)
3. Example 2 (modification of Example 1)
4. Example 3 (modification of Example 1, electrolytic solution according to a second mode of the present disclosure)
5. Example 4 (modification of Examples 1 to 3)
6. Example 5 (application example of magnesium secondary batteries of Examples 1 to 3)
7. Others

### <General description of electrolytic solution and electrochemical device of the present disclosure>

An electrolytic solution of the present disclosure, an electrochemical device or a secondary battery of the present disclosure, and an electrolytic solution constituting a plating bath described below (hereinafter, these may be generically referred to as an "electrolytic solution or the like of the present disclosure") may contain a sulfone and a magnesium salt dissolved in the sulfone. Incidentally, such a mode is referred to as an "electrolytic solution according to a first mode of the present disclosure" for convenience. In addition, the magnesium salt may include MgXₙ (in which n is 1 or 2, and X is a monovalent or divalent anion). In this case, X may include a molecule containing a halogen, -SO₄, -NO₃, or a hexaalkyldisiazide group. Specifically, the molecule containing a halogen (halide) may include MgX₂ (X = Cl, Br, or I), and more specifically may include magnesium chloride (MgCl₂), magnesium bromide MgBr₂), or magnesium iodide (MgI₂). Alternatively, the magnesium salt may be at least one magnesium salt selected from the group consisting of magnesium perchlorate (Mg(ClO₄)₂), magnesium nitrate (Mg(NO₃)₂), magnesium sulfate (MgSO₄), magnesium tetrafluoroborate (Mg(BF₄)₂), magnesium tetraphenylborate (Mg(B(C₆H₅)₄)₂), magnesium hexafluorophosphate (Mg(PF₆)₂), magnesium hexafluoroarsenate (Mg(AsF₆)₂), magnesium perfluoroalkylsulfonate ((Mg (R_{f1}SO₃)₂), in which R_{f1} is a perfluoroalkyl group), magnesium perfluoroalkylsulfonylimide (Mg ((R_{f2}SO₂)₂N)₂, in which R_{f2} is a perfluoroalkyl group), and magnesium hexaalkyl disilazide ((Mg(HRDS)₂), in which R is an alkyl group). Incidentally, each of the magnesium salts mentioned above from magnesium chloride to (Mg(HRDS)₂) is referred to as "magnesium salt-A" for convenience. In addition, in magnesium salt-A, for example, a molar ratio of a sulfone to the magnesium salt is preferably 4 or more and 35 or less, more preferably 6 or more and 16 or less, and still more preferably 7 or more and 9 or less, but is not limited thereto.

Furthermore, the electrolytic solution or the like of the present disclosure can be applied to a plating bath.

Specifically, the plating bath contains a sulfone and a magnesium salt dissolved in the sulfone.

The magnesium salt includes a halide (molecule containing a halogen) of magnesium, the plating bath has a moisture content of more than 10 ppm and less than 500 ppm. Alternatively, the plating bath includes a sulfone and a magnesium salt dissolved in the sulfone.

The magnesium salt includes at least one magnesium salt selected from the group consisting of magnesium borohydride, magnesium perchlorate, magnesium nitrate, magnesium sulfate, magnesium tetrafluoroborate, magnesium tetraphenyl borate, magnesium hexafluorophosphate, magnesium hexafluoroarsenate, magnesium perfluoroalkylsulfonate, magnesium tetraphenylborate, magnesium perfluoroalkylsulfonylimide, and magnesium hexaalkyl disilazide.

The plating bath has a moisture content of more than 10 ppm and less than 500 ppm.

Alternatively, examples of the magnesium salt in the electrolytic solution according to the first mode of the present disclosure include magnesium borohydride (Mg(BH₄)₂). As described above, if a magnesium salt used includes magnesium borohydride (Mg(BH₄)₂) and contains no halogen atom, it is unnecessary to manufacture various members constituting the electrochemical device from a material having high corrosion resistance. Incidentally, such an electrolytic solution can be manufactured by dissolving magnesium borohydride in a sulfone. The magnesium salt including magnesium borohydride (Mg(BH₄)₂) is called "magnesium salt-B" for convenience. Such an electrolytic solution of the present disclosure is a magnesium ion-containing nonaqueous electrolytic solution in which magnesium salt-B is dissolved in a solvent including a sulfone. A molar ratio of a sulfone to magnesium salt-B in the electrolytic solution is, for example, 50 or more and 150 or less, typically 60 or more and 120 or less, and preferably 65 or more and 75 or less, but is not limited thereto.

In addition, the sulfone can be an alkylsulfone represented by R₁R₂SO₂ (in which R₁ and R₂ each represent an alkyl group) or an alkylsulfone derivative. The types (carbon numbers and combinations) of R₁ and R₂ are not particularly limited, and selected as necessary. The carbon number of each of R₁ and R₂ is preferably 4 or less, but is not limited thereto. Furthermore, the sum of the number of carbon atoms of R₁ and the number of carbon atoms of R₂ is preferably 4 or more and 7 or less, but is not limited thereto. Examples of R₁ and R₂ include a methyl group, an ethyl group, a n-propyl group, an i-propyl group, a n-butyl group, an i-butyl group, a s-butyl group, and a t-butyl group.

Specific examples of the alkylsulfone include at least one alkylsulfone selected from the group consisting of dimethylsulfone (DMS), methylethylsulfone (MES), methyl-n-propylsulfone (MnPS), methyl-i-propylsulfone (MiPS), methyl-n-butylsulfone (MnBS), methyl-i-butylsulfone (MiBS), methyl-s-butylsulfone (MsBS), methyl-t-butylsulfone (MtBS), ethylmethylsulfone (EMS), diethylsulfone (DES), ethyl-n-propylsulfon (EnPS), ethyl-i-propylsulfone (EiPS), ethyl-n-butylsulfone (EnBS), ethyl-i-butylsulfone (EiBS), ethyl-s-butylsulfone (EsBS), ethyl-t-butylsulfone (EtBS), di-n-propylsulfone (DnPS), di-i-propylsulfone (DiPS), n-propyl-n-butylsulfone (nPnBS), n-butyl ethylsulfone (nBES), i-butyl ethylsulfone (iBES), s-butyl ethylsulfone (sBES), and din-butylsulfone (DnBS). Furthermore, examples of the alkyl sulfone derivative include ethyl phenyl sulfone (EPhS). In addition, among these sulfones, at least one selected from the group consisting of EnPS, EiPS, EsBS, and DnPS is preferable.

Alternatively, the electrolytic solution or the like of the present disclosure may contain an ether (broadly, aprotic solvent) and a magnesium salt dissolved in the ether (aprotic solvent). Incidentally, such a mode is referred to as an "electrolytic solution according to a second mode of the present disclosure" for convenience. In addition, in this case, the magnesium salt may include Mg(AlCl₃R¹)₂ or Mg(AlCl₂R²R³)₂ (in which R¹, R², and R³ are each an alkyl group) . The types (carbon numbers and combinations) of R¹, R², and R³ are not particularly limited, and selected as necessary. The number of carbon atoms of each of R¹, R², and R³ is preferably 4 or less, but is not limited thereto. Furthermore, the sum of the number of carbon atoms of R₂ and the number of carbon atoms of R³ is preferably 4 or more and 7 or less, but is not limited thereto. Examples of R¹, R², and R³ include a methyl group, an ethyl group, a n-propyl group, an i-propyl group, a n-butyl group, an i-butyl group, a s-butyl group, and a t-butyl group.

The ether can include a cyclic ether or a linear ether. Specific examples of the cyclic ether include at least one cyclic ether selected from the group consisting of tetrahydrofuran (THF), dioxolane, dioxane, an epoxide, and a furan. Specific examples of the linear ether include dialkyl glycol ether. Specific examples of the dialkyl glycol ether include ethylene glycol dimethyl ether, diethylene glycol dimethyl ether, triethylene glycol dimethyl ether, tetraethylene glycol dimethyl ether, pentaethylene glycol dimethyl ether, hexaethylene glycol dimethyl ether, polyethylene glycol dimethyl ether, and triethylene glycol butyl methyl ether, but are not limited thereto.

The electrochemical device of the present disclosure including various preferable modes described above can be a battery (specifically, a primary battery or a secondary battery) in which an electrolyte layer is constituted by the electrolytic solution or the like of the present disclosure.

The moisture content in the electrolytic solution or the like of the present disclosure can be measured with a Karl Fischer moisture meter. In addition, for example, it is only required to measure the moisture content after the electrolytic solution or the like of the present disclosure is manufactured, and to add moisture to the electrolytic solution or the like of the present disclosure so as to obtain a desired moisture content on the basis of the moisture content measurement result. In some cases, the moisture content in the electrolytic solution or the like of the present disclosure after the electrolytic solution or the like of the present disclosure is manufactured may be a desired moisture content due to moisture contained in a raw material of the electrolytic solution or the like of the present disclosure. Furthermore, moisture contained in a negative electrode, a positive electrode, a separator, an exterior member, and the like constituting the electrochemical device is mixed in the electrolytic solution, and the moisture content in the electrolytic solution or the like of the present disclosure after the electrolytic solution or the like of the present disclosure is manufactured may be a desired moisture content. Furthermore, in order to measure the moisture content of the electrolytic solution in the electrochemical device, for example, it is only required to disassemble the electrochemical device in a glove box in an inert gas atmosphere and to measure the moisture content with a Karl Fischer moisture meter while sufficient attention is paid such that the electrolytic solution does not to absorb water.

The electrolytic solution or the like of the present disclosure or the plating bath may further contain an additive as necessary. Examples of the additive include a salt in which a metal ion includes a cation of at least one atom or atomic group selected from the group consisting of aluminum (Al), beryllium (Be), boron (B), gallium (Ga), indium (In), silicon (Si), tin (Sn), titanium (Ti), chromium (Cr), iron (Fe), cobalt (Co), and lanthanum (La). Alternatively, examples of the additive include a salt including at least one atom, organic group, or anion selected from the group consisting of a hydrogen atom, an alkyl group, an alkenyl group, an aryl group, a benzyl group, an amide group, a fluoride (fluorine) ion (F⁻), a chloride (chlorine) ion (Cl⁻), a bromide (bromine) ion (Br⁻), an iodide (iodine) ion (I⁻), a perchlorate ion (ClO₄⁻), a hexafluoroborate ion (BF₄⁻), a hexafluorophosphate ion (PF₆⁻), a hexafluoroarsenate ion (AsF₆⁻), a perfluoroalkyl sulfonate ion (R_{f1}SO₃⁻ in which R_{f1} is a perfluoroalkyl group), and a perfluoroalkyl sulfonyl imide ion ((R_{f2}SO₂)₂N⁻ in which R_{f2} is a perfluoroalkyl group) . By adding such an additive, ionic conductivity of the electrolytic solution can be improved.

For example, the electrolytic solution or the like of the present disclosure using magnesium salt-A can be manufactured on the basis of steps of dissolving magnesium salt-A in a low boiling point solvent capable of dissolving magnesium salt-A, then dissolving a sulfone in the solution obtained by dissolving magnesium salt-A in the low boiling point solvent, and subsequently removing the low boiling point solvent from the solution in which the sulfone is dissolved.

As the low boiling point solvent capable of dissolving magnesium salt-A, basically, any solvent can be used as long as being a solvent having a boiling point lower than a sulfone selected among solvents capable of dissolving magnesium salt-A, and a solvent is selected as necessary, but an alcohol is preferably used. The alcohol may be a monohydric alcohol or a polyhydric alcohol, and may be a saturated alcohol or an unsaturated alcohol. Specific examples of the alcohol include methanol, ethanol, 1-propanol, 2-propanol (isopropanol), 1-butanol, 2-butanol (sec-butanol), 2-methyl-1-propanol (isobutanol), 2-methyl-2-propanol (tert-butanol), and 1-pentanol, but are not limited thereto. A dehydrated alcohol is preferably used as the alcohol.

Specifically, first, magnesium salt-A is dissolved in an alcohol. As the magnesium salt-A, an anhydrous magnesium salt can be preferably used. Usually, magnesium salt-A is not dissolved in a sulfone, but is dissolved well in an alcohol. In this way, when magnesium salt-A is dissolved in an alcohol, the alcohol is coordinated to magnesium. Subsequently, a sulfone is dissolved in the alcohol in which magnesium salt-A is dissolved. Thereafter, the alcohol is removed by heating this solution under reduced pressure. In the process of removing the alcohol in this manner, the alcohol coordinated to magnesium is exchanged (or replaced) with the sulfone. As described above, the electrolytic solution or the like of the present disclosure can be manufactured.

As described above, it is possible to obtain a magnesium ion-containing nonaqueous electrolytic solution which can be used for a magnesium metal and exhibits an electrochemically reversible precipitation and dissolution reaction of magnesium at room temperature using a sulfone which is a nonether type solvent. In addition, energy density can be improved, and the composition of this electrolytic solution is simple. Therefore, cost of the electrolytic solution itself can be largely reduced.

Alternatively, the electrolytic solution or the like of the present disclosure or the plating bath contains a solvent including a sulfone and a nonpolar solvent, and magnesium salt-A dissolved in the solvent.

The nonpolar solvent is selected as necessary, but is preferably a nonaqueous solvent having a dielectric constant and the number of donors of 20 or less. More specifically, examples of the nonpolar solvent include at least one nonpolar solvent selected from the group consisting of an aromatic hydrocarbon, an ether, a ketone, an ester, and a chain carbonate. Examples of the aromatic hydrocarbon include toluene, benzene, o-xylene, m-xylene, p-xylene, and 1-methylnaphthalene. Examples of the ether include diethyl ether and tetrahydrofuran. Examples of the ketone include 4-methyl-2-pentanone. Examples of the ester include methyl acetate and ethyl acetate. Examples of the chain carbonate include dimethyl carbonate, diethyl carbonate, and ethyl methyl carbonate.

The sulfone and magnesium salt-A are as described above. Furthermore, the above-described additives may be added to the electrolytic solution as necessary. In addition, for example, a molar ratio of a sulfone to magnesium salt-A is preferably 4 or more and 20 or less, more preferably 6 or more and 16 or less, and still more preferably 7 or more and 9 or less, but is not limited thereto.

For example, the electrolytic solution or the like of the present disclosure using magnesium salt-A and a nonpolar solvent can be manufactured on the basis of steps of dissolving magnesium salt-A in a low boiling point solvent capable of dissolving magnesium salt-A, then dissolving a sulfone in the solution obtained by dissolving magnesium salt-A in the low boiling point solvent, subsequently removing the low boiling point solvent from the solution in which the sulfone is dissolved, and then mixing a nonpolar solvent with the solution from which the low boiling point solvent has been removed.

Specifically, first, magnesium salt-A is dissolved in an alcohol. As a result, the alcohol is coordinated to magnesium. As the magnesium salt-A, an anhydrous magnesium salt can be preferably used. Subsequently, a sulfone is dissolved in the alcohol in which the magnesium salt is dissolved. Thereafter, the alcohol is removed by heating this solution under reduced pressure. In the process of removing the alcohol in this manner, the alcohol coordinated to magnesium is exchanged (or replaced) with the sulfone. Subsequently, a nonpolar solvent is mixed with the solution from which the alcohol has been removed. As described above, the electrolytic solution or the like of the present disclosure can be manufactured.

Alternatively, other examples of the solvent include ethylene carbonate, propylene carbonate, dimethyl carbonate, diethyl carbonate, ethyl methyl carbonate, methyl propyl carbonate, acetonitrile, dimethoxyethane, diethoxyethane, vinylene carbonate, γ-butyrolactone, and tetrahydrofuran. These solvents can be used singly or in mixture of two or more kinds thereof.

When the electrochemical device (or secondary battery) of the present disclosure is a battery (primary battery or secondary battery) having an electrolyte layer including the electrolytic solution of the present disclosure, examples of the battery include a battery including a negative electrode including a magnesium-based material, specifically, a negative electrode (specifically, a negative electrode active material) including magnesium, a magnesium alloy, or a magnesium compound. More specific examples of the secondary battery include a magnesium battery, an air battery, and a fuel battery.

Furthermore, when the electrochemical device (or secondary battery) of the present disclosure is a battery having an electrolyte layer including the electrolytic solution of the present disclosure, for example, a positive electrode using sulfur (S), graphite fluoride ((CF)ₙ), oxides and halides of various metals [for example, scandium (Sc), titanium (Ti), vanadium (V), chromium (Cr), manganese (Mn), iron (Fe), cobalt (Co), nickel (Ni), copper (Cu), zinc (Zn), or molybdenum (Mo)], a sulfide, or a selenide as a positive electrode active material can be used, but the battery is not limited thereto. For example, the positive electrode can have a structure in which a positive electrode active material layer is formed on a surface of a positive electrode current collector. However, the positive electrode may have a structure not including a positive electrode current collector but only including a positive electrode active material layer. For example, the positive electrode current collector includes a metal foil such as an aluminum foil. The positive electrode active material layer may contain at least one of a conductive auxiliary agent and a binder as necessary.

Examples of the conductive auxiliary agent include a carbon material such as graphite, a carbon fiber, carbon black, or a carbon nanotube, and can be used singly of in mixture of two or more kinds thereof. Examples of the carbon fiber include a vapor growth carbon fiber (VGCF). Examples of the carbon black include acetylene black and Ketjen black. Examples of the carbon nanotube include a single wall carbon nanotube (SWCNT) and a multi wall carbon nanotube (MWCNT) such as a double wall carbon nanotube (DWCNT). A material other than the carbon material can be used as long as the material has excellent conductivity. For example, a metal material such as Ni powder or a conductive polymer material can be used. Examples of the binder include a fluorine-based resin such as polyvinylidene fluoride (PVdF) or polytetrafluoroethylene (PTFE), and a polymer resin such as a polyvinyl alcohol (PVA) resin or a styrene-butadiene copolymer rubber (SBR) resin. Furthermore, a conductive polymer may be used as the binder. Examples of the conductive polymer include substituted or unsubstituted polyaniline, polypyrrole, polythiophene, and a (co)polymer including one or two kinds selected therefrom.

Examples of a material constituting a negative electrode (specifically, a negative electrode active material) include a magnesium metal simple substance, a magnesium alloy, and a magnesium compound as described above. For example, the negative electrode is manufactured from a plate-like material or a foil-like material, but is not limited thereto, and can be formed (shaped) using powder. In some cases, the negative electrode can be manufactured by an electrolytic plating method using an electrolytic solution containing a sulfone and a magnesium salt (the electrolytic solution of the present disclosure). Examples of a material constituting a current collector in the negative electrode include a metal foil such as a copper foil, a nickel foil, or a stainless steel foil.

Alternatively, examples of an active material layer formed in the vicinity of a surface of the negative electrode include a layer having magnesium ion conductivity, containing at least magnesium (Mg), carbon (C), oxygen (O), sulfur (S), and halogen. Such an active material layer in the negative electrode preferably has a single peak derived from magnesium in a range of 40 eV or more and 60 eV or less. Examples of the halogen include at least one selected from the group consisting of fluorine (F), chlorine (Cl), bromine (Br), and iodine (I). In addition, in this case, the active material layer more preferably has a single peak derived from magnesium in a range of 40 eV or more and 60 eV or less from a surface of the active material layer in the negative electrode to the depth of 2 × 10⁻⁷ m. This is because the active material layer exhibits good electrochemical activity from the surface thereof to the inside thereof. Furthermore, for a similar reason, an oxidation state of magnesium is preferably substantially constant from the surface of the active material layer in the negative electrode to the depth of 2 × 10⁻⁷ m in the depth direction. Here, the surface of the active material layer in the negative electrode means a surface on a side constituting a surface of the electrode of both surfaces of the active material layer. A back surface means a surface on a side opposite to this surface, that is, a surface on a side constituting an interface between a current collector and the active material layer. Whether the active material layer contains the above elements can be confirmed on the basis of an X-ray photoelectron spectroscopy (XPS) method. Furthermore, it can also be confirmed similarly on the basis of the XPS method that the active material layer has the above peak and has an oxidation state of magnesium.

The positive electrode and the negative electrode are separated by an inorganic separator or an organic separator for allowing a magnesium ion to pass while preventing short circuit due to contact between both electrodes. Examples of the inorganic separator include a glass filter and a glass fiber. Examples of the organic separator include a synthetic resin porous film including polytetrafluoroethylene, polypropylene, or polyethylene, and can have a structure in which two or more kinds of these porous films are laminated. Among these films, a polyolefin porous film is preferable because the polyolefin porous film exhibits an excellent short circuit preventing effect, and can improve safety of a battery due to a shutdown effect.

The electrolyte layer can be constituted by the electrolytic solution of the present disclosure and a polymer compound including a holding body for holding the electrolytic solution. The polymer compound may be swollen by the electrolytic solution. In this case, the polymer compound swollen by the electrolytic solution may be gel-like. Examples of the polymer compound include polyacrylonitrile, polyvinylidene fluoride, a copolymer of vinylidene fluoride and hexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene, and polycarbonate. Polyacrylonitrile, polyvinylidene fluoride, polyhexafluoropropylene, or polyethylene oxide is particularly preferable from a viewpoint of electrochemical stability. The electrolyte layer may be a solid electrolyte layer.

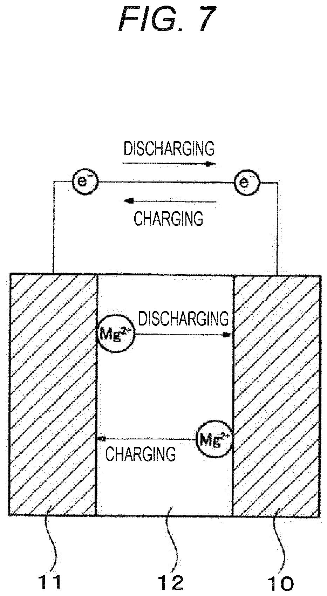

In the magnesium secondary battery having the above-described configuration, as illustrated in the conceptual diagram of the electrochemical device (battery) in Fig. 7, a magnesium ion (Mg²⁺) moves from a positive electrode to a negative electrode through an electrolyte layer during charging, and electric energy is thereby converted into chemical energy for power storage. The magnesium ion returns from the negative electrode to the positive electrode through the electrolyte layer during discharging, and electric energy is thereby generated.

When the electrochemical device of the present disclosure is a battery (primary battery or secondary battery) having an electrolyte layer including the electrolytic solution of the present disclosure, for example, the battery can be used as a driving power source or an auxiliary power source of a notebook type personal computer, a portable information terminal (PDA), a mobile phone, a smart phone, a master cordless phone or a slave cordless phone, a video movie, a digital still camera, an electronic book, an electronic dictionary, a portable music player, a radio, a headphone, a game machine, a navigation system, a memory card, a cardiac pacemaker, a hearing aid, an electric tool, an electric shaver, a refrigerator, an air conditioner, a television receiver, a stereo, a water heater, a microwave oven, a dishwasher, a washing machine, a dryer, a lighting apparatus, a toy, a medical device, a robot, a road conditioner, a traffic light, a railway vehicle, a golf cart, an electric cart, or an electric car (including a hybrid vehicle). Furthermore, the battery can be mounted on a building such as a house, a power storage power source for power generation facilities, or the like, or can be used in order to supply power thereto. In an electric car, a conversion device for converting power into a driving force by receiving power is generally a motor. A control device for performing information processing relating to vehicle control includes a control device for displaying the remaining amount of a battery on the basis of information on the remaining amount of the battery. Furthermore, the battery can be used in a power storage device in a so-called smart grid. Such a power storage device not only supplies power but also can store power by receiving power from another power source. Examples of the other power source include thermal power generation, nuclear power generation, hydropower generation, a solar battery, wind power generation, geothermal power generation, and a fuel battery (including a biofuel battery).

The electrochemical device (or secondary battery) of the present disclosure including the above various preferable modes can be applied to a secondary battery, a control unit for controlling a secondary battery, and a secondary battery in a battery pack having an exterior enclosing the secondary battery. In this battery pack, for example, the control unit controls charge/discharge, overdischarge, or overcharge of the secondary battery.

The electrochemical device (or secondary battery) of the present disclosure including the above various preferable modes can be applied to a secondary battery in an electronic device that receives power from the secondary battery.

The electrochemical device (or secondary battery) of the present disclosure including the above various preferable modes can be applied to a secondary battery in an electric vehicle including a conversion device for converting power supplied from the secondary battery into a driving force of the vehicle and a control device for performing information processing related to vehicle control on the basis of information on the secondary battery. In this electric vehicle, the conversion device typically receives power from the secondary battery, drives a motor, and generates a driving force. Driving of the motor can also use regenerative energy. Furthermore, for example, the control device performs information processing on vehicle control on the basis of the remaining amount of a secondary battery. Examples of this electric vehicle include a so-called hybrid car in addition to an electric car, an electric motorcycle, an electric bicycle, and a railway vehicle.

The electrochemical device (or secondary battery) of the present disclosure including the above various preferable modes can be applied to a secondary battery in a power system configured to receive power from the secondary battery and/or to supply power from a power source to the secondary battery. This power system may be any power system as long as using power, and includes a simple power device. Examples of this power system include a smart grid, a home energy management system (HEMS), and a vehicle. The power system can also store power.

The electrochemical device (or secondary battery) of the present disclosure including the above various preferable modes can be applied to a secondary battery in a power storage power source including a secondary battery and configured to be connected to an electronic device to which power is supplied. This power storage power source can be basically used for any power system or power device regardless of application of the power storage power source, but can be used for a smart grid, for example.

Alternatively, examples of the electrochemical device include a capacitor, a sensor, and a magnesium ion filter. The capacitor includes a positive electrode, a negative electrode, and a separator sandwiched between the positive electrode and the negative electrode and impregnated with an electrolytic solution.

Alternatively, the electrolytic solution of the present disclosure including the above preferable modes can be used as a plating bath as described above. That is, it is only required to use the electrolytic solution of the present disclosure including the above preferable modes as a plating bath, to use, for example, a plate-shaped or bar-shaped magnesium metal simple substance as a positive electrode (counter electrode), and to use, for example, platinum (Pt) or a platinum alloy, nickel (Ni) or a nickel alloy, stainless steel, a current collector material for a negative electrode as a material to be plated constituting a negative electrode (working electrode).

### [Example 1]

Example 1 relates to the electrolytic solution of the present disclosure and the electrochemical device of the present disclosure, and further relates to the electrolytic solution according to the first mode of the present disclosure.

The electrolytic solution of Example 1 is an electrolytic solution for an electrochemical device including a negative electrode including a magnesium-based material, and has a moisture content of more than 10 ppm and less than 500 ppm, preferably more than 10 ppm and 400 ppm or less, more preferably more than 10 ppm and 300 ppm or less. Furthermore, the electrochemical device (or secondary battery) of Example 1 is an electrochemical device (or secondary battery) including a negative electrode including a magnesium-based material, and includes an electrolytic solution having a moisture content of more than 10 ppm and less than 500 ppm, preferably more than 10 ppm and 400 ppm or less, more preferably more than 10 ppm and 300 ppm or less. That is, the electrochemical device of Example 1 is specifically a battery (more specifically, a primary battery or a secondary battery in which a negative electrode (specifically, negative electrode active material) includes a magnesium-based material) having an electrolyte layer including the electrolytic solution of Example 1.

In Example 1, the electrolytic solution contains a sulfone and a magnesium salt dissolved in the sulfone. In addition, the magnesium salt includes MgXₙ (in which n is 1 or 2, and X is a monovalent or divalent anion). Here, X includes a molecule containing a halogen, -SO₄, - NO₃, or a hexaalkyldisiazide group. Specifically, the halide (molecule containing a halogen) includes MgX₂ (X = Cl, Br, or I). More specifically, the halide includes MgCl₂ in Example 1. Alternatively, the magnesium salt includes at least one magnesium salt selected from the group consisting of magnesium perchlorate (Mg(ClO₄)₂), magnesium nitrate (Mg(NO₃)₂), magnesium sulfate (MgSO₄), magnesium tetrafluoroborate (Mg(BF₄)₂), magnesium tetraphenylborate (Mg(B(C₆H₅)₄)₂), magnesium hexafluorophosphate (Mg(PF₆)₂), magnesium hexafluoroarsenate (Mg(AsF₆)₂), magnesium perfluoroalkylsulfonate ((Mg(R_{f1}SO₃)₂) in which R_{f1} is a perfluoroalkyl group), magnesium perfluoroalkylsulfonylimide (Mg ((R_{f2}SO₂)₂N)₂ in which R_{f2} is a perfluoroalkyl group), and magnesium hexaalkyl disilazide ((Mg(HRDS)₂) in which R is an alkyl group) (referred to as "the other magnesium salt" for convenience). The sulfone includes an alkyl sulfone represented by R₁R₂SO₂ (in which R₁ and R₂ each represent an alkyl group), and is specifically including ethyl-n-propyl sulfone (EnPS).

An electrolytic solution (Mg-EnPS) of Example 1 was prepared as follows.

Weighing and mixing of a reagent were performed in a glove box (argon gas atmosphere/dew point -80°C to - 90°C). This applies to the following Examples similarly. 3.81 g of anhydrous magnesium(II) chloride (MgCl₂) was added while 100 ml of dehydrated methanol was stirred with a stirrer. It was confirmed by measuring a temperature outside a reaction container with a contact type thermometer that a slight amount of heat was generated when MgCl₂ was dissolved in methanol. This heat generation is due to heat of reaction when methanol is coordinated to Mg, and it is considered that methanol is coordinated to Mg in methanol. Furthermore, cloudiness was observed slightly even after MgCl₂ was dissolved. It is considered that this is due to generation of Mg(OH)₂ by a reaction between water remaining in methanol and Mg. The amount of cloudiness was extremely small, and therefore operation was continued without filtration.

After MgCl₂ was dissolved, 43.6 g of EnPS was added under stirring with a stirrer. Then, this solution was taken out of the glove box while being kept in a state in which atmosphere was not mixed, and methanol was removed by heating and stirring the solution at 120°C for 2 hours while the pressure was reduced using a rotary pump. When the amount of methanol was reduced, a white precipitate was generated. However, when heating under reduced pressure was continued, the generated precipitate was dissolved. It is considered that this change in solubility is caused by exchange of a Mg ligand from methanol to EnPS. Removal of methanol was confirmed by ¹H NMR measurement.

In the sample after removal of methanol, cloudiness generated when MgCl₂ was dissolved in methanol remained, and therefore filtration (pore diameter 0.45 µm; manufactured by Whatman plc) was performed in the glove box. The obtained electrolytic solution had Mg: Cl: EnPS = 1: 2: 8 (molar ratio) and a Mg concentration of 0.95 mol/l. Thereafter, a predetermined amount of water was added.

Incidentally, the moisture content in a state in which water was not added was 10 ppm.

Then, in Example 1, a magnesium secondary battery (coin battery CR2016 type) containing sulfur (S) in a positive electrode (that is, containing a positive electrode using sulfur as a positive electrode active material) and containing magnesium in a negative electrode was manufactured. A relationship between the moisture content of the electrolytic solution and cycle characteristics was examined. Specifically, the coin battery was manufactured using magnesium (Mg) as a negative electrode and sulfur (S) as a positive electrode. Test conditions are indicated in Table 1 below.

**<Table 1>**

| | |
|---|---|
| Discharge condition: | 0.1 mA/cutoff voltage 0.7 V |
| Charge condition: | 0.1 mA/cutoff voltage 2.5 V |

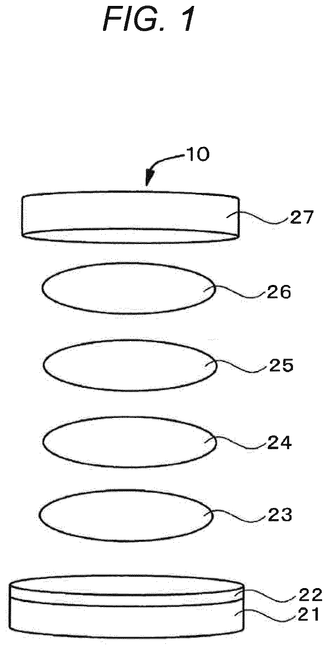

The schematic view of Fig. 1 illustrates a state in which a coin battery 10 is disassembled. A gasket 22 is placed on a coin battery can 21. A positive electrode 23 including sulfur, a separator 24 including a glass fiber, a negative electrode 25 including a Mg plate having a diameter of 1.5 mm and a thickness of 0.25 µm, a spacer 26 including a stainless steel plate having a thickness of 0.5 µm, and a coin battery lid 27 were laminated in this order, and then the coin battery can 21 was crimped and sealed. The spacer 26 was previously spot-welded to the coin battery lid 27. The separator 24 contained the electrolytic solution of Example 1. More specifically, the positive electrode 23 contained 10% by mass of sulfur (S₈), further contained 65% by mass of Ketjen black as a conductive auxiliary agent, and contained 25% by mass of PTFE as a binder. As described above, the electrolytic solution was including MgCl₂: EnPS = 1: 8 (molar ratio), and contained a predetermined amount of water added.

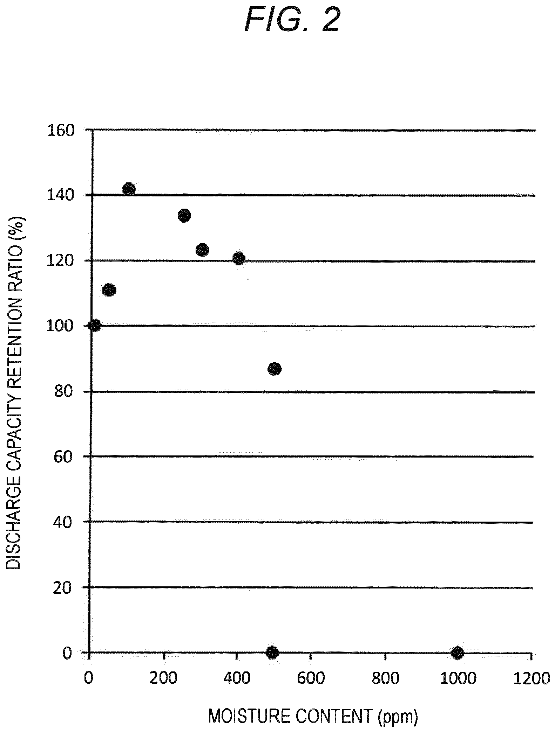

In addition, Fig. 2 illustrates a graph obtained by plotting a discharge capacity (expressed as "discharge capacity retention ratio") at a fifth cycle of a charge/discharge cycle in each of samples having various moisture contents when the discharge capacity at the fifth cycle of the charge/discharge cycle of a sample having a moisture content of 10 ppm in a state in which no water is added is assumed to be 100%. The magnesium secondary battery of Example 1 had a moisture content of more than 10 ppm, and maintained a high capacity retention ratio up to 400 ppm. Meanwhile, when the moisture content was 500 ppm or more, discharge at the first cycle could not be performed.

In a nonaqueous secondary battery, as the moisture content of an electrolytic solution increases, battery characteristics are generally deteriorated. However, it has become clear that the nonaqueous secondary battery of Example 1 improves the capacity retention ratio more than the electrolytic solution to which no moisture has been added until the moisture content in the electrolytic solution is 400 ppm. The reason for this is considered to be the following. That is, in a case of a nonaqueous secondary battery (specifically, magnesium secondary battery), in a case where the moisture content is a certain value, specifically more than 10 ppm and less than 500 ppm, water molecules and magnesium form a moderate coating film on a surface of a negative electrode (specifically, a surface of magnesium), and an unnecessary side reaction with a positive electrode is suppressed. However, when the moisture content is 500 ppm or more, it is predicted that the nonaqueous secondary battery does not function as a battery due to general deterioration of battery characteristics caused by an increase in moisture content (that is, electrochemical activities of both the negative electrode and the positive electrode are deteriorated). In this way, when the moisture content is more than 10 ppm and less than 500 ppm, it is considered that cycle characteristics are improved on the basis of suppression of an unnecessary side reaction with the positive electrode due to formation of a moderate coating film by water molecules and magnesium on the surface of the negative electrode (surface of magnesium) more than the general deterioration of the battery characteristics due to moisture.

In the electrolytic solution of Example 1 or the electrolytic solution constituting the electrochemical device of Example 1, a phenomena that the cycle characteristics are improved when the moisture content is more than 10 ppm and less than 500 ppm, different from an established theory, has become clear. In addition, in such a range of the moisture content, it is not required to use super dehydration type substances for a material constituting the electrolytic solution (for example, solvent), and special storage (for example, dry room or glove box) or manufacturing line is unnecessary. An increase in manufacturing cost of the electrolytic solution or the electrochemical device can be suppressed. In addition, by using this excellent electrolytic solution for an electrolyte layer, a high-performance electrochemical device such as a magnesium battery can be realized.

### [Example 2]

Example 2 is a modification of Example 1. In Example 2, magnesium borohydride (Mg(BH₄)₂) <magnesium salt-B> was used as a magnesium salt in place of MgCl₂. The electrolytic solution of Example 2 as described above can be manufactured by dissolving magnesium borohydride (Mg(BH₄)₂) in a sulfone. Incidentally, also in Example 2, the sulfone includes an alkyl sulfone represented by R₁R₂SO₂ (in which R₁ and R₂ each represent an alkyl group), and is specifically including ethyl-n-propyl sulfone (EnPS). Such an electrolytic solution of Example 2 is a magnesium ion-containing nonaqueous electrolytic solution in which magnesium salt-B is dissolved in a solvent including a sulfone, and is an electrolytic solution for an electrochemical device.

The electrolytic solution of Example 2 was manufactured by the following method. That is, 49 mg of magnesium borohydride (Mg(BH₄)₂) was added while 5 ml of EnPS as a solvent was stirred with a stirrer, and the resulting mixture was stirred for 90 minutes with a stirrer to dissolve magnesium borohydride in the sulfone. Thereafter, filtration (pore diameter 0.45 µm) was performed to remove undissolved magnesium borohydride. Then, a predetermined amount of water was added.

Even in such a magnesium secondary battery using the electrolytic solution of Example 2 (coin battery CR2016 type containing sulfur (S) in a positive electrode and containing magnesium in a negative electrode), in a case where the moisture content of the electrolytic solution was more than 10 ppm and less than 500 ppm, excellent cycle characteristics could be obtained as in Example 1.

As described above, even in Example 2, it is possible to obtain a magnesium ion-containing nonaqueous electrolytic solution which can be used for a magnesium electrode and exhibits an electrochemically reversible precipitation and dissolution reaction of magnesium at room temperature using a sulfone which is a nonether type solvent. In addition, the magnesium salt used is magnesium borohydride (Mg(BH₄)₂), and does not contain a halogen atom. Therefore, in addition to the advantages described in Example 1, it is unnecessary to manufacture various members constituting the electrochemical device from materials having high corrosion resistance. In addition, the composition of this electrolytic solution is simple. Therefore, cost of the electrolytic solution itself can be drastically reduced, and a high-performance electrochemical device such as a magnesium battery can be realized by using this excellent electrolytic solution for an electrolyte layer.

Furthermore, a Mg electrolytic solution (Mg-EnPS-toluene) was prepared as follows. That is, 1.9 g of low-moisture toluene as a nonpolar solvent was added while 11.8 g of the electrolytic solution (Mg-EnPS) of Example 1 was stirred with a stirrer. The obtained electrolytic solution had Mg: Cl: EnPS = 1: 2: 8 (molar ratio), MgCl₂: toluene = 1: 2 (mass ratio), and a Mg concentration of 0.78 mol/l.

A Mg electrolytic solution (Mg-EnPS-BF₄) was prepared as follows. That is, 3.9 g of AgBF₄ (MgCl₂: AgBF₄ in electrolytic solution = 1: 2 (molar ratio)) was added while 11.8 g of the electrolytic solution (Mg-EnPS) of Example 1 was stirred with a stirrer. It was confirmed by temperature measurement outside a reaction container with a contact type thermometer that heat was generated by addition of AgBF₄, and AgBF₄ was added at such a speed that the temperature of a sample did not exceed 40°C due to this heat generation. This heat generation is reaction heat when AgCl is generated, and the generated AgCl is precipitated. The whole amount of AgBF₄ was added, and then the resulting mixture was stirred with a stirrer for one day. Thereafter, AgCl was removed by centrifugation and filtration. The obtained electrolytic solution had Mg: EnPS = 1: 8 (molar ratio), Mg: BF₄ = 1: 2 (molar ratio), and a Mg concentration of 0.95 mol/liter.

A Mg electrolytic solution (Mg-EiPS) was prepared as follows. That is, as in Example 1, anhydrous magnesium(II) chloride (MgCl₂) was dissolved in dehydrated methanol, and then 43.6 g of EiPS was added under stirring with a stirrer. Then, as in Example 1, this solution was taken out of the glove box while being kept in a state in which atmosphere was not mixed, and methanol was removed by heating and stirring the solution at 110°C for 2 hours while the pressure was reduced using a rotary pump. When the amount of methanol was reduced, a white precipitate was generated. However, when heating under reduced pressure was continued, the generated precipitate was dissolved. It is considered that this change in solubility is caused by exchange of a Mg ligand from methanol to EiPS. Removal of methanol was confirmed by ¹H NMR measurement. In the sample after removal of methanol, cloudiness generated when MgCl₂ was dissolved in methanol remained, and therefore filtration (pore diameter 0.45 µm; manufactured by Whatman plc) was performed in the glove box. The obtained electrolytic solution had Mg: Cl: EiPS = 1: 2: 8 (molar ratio) and a Mg concentration of 1.00 mol/l.

A Mg electrolytic solution (Mg-DnPS) was prepared as follows. As in Example 1, anhydrous magnesium(II) chloride (MgCl₂) was dissolved in dehydrated methanol, and then 48.1 g of DnPS which had been previously dissolved with a hot stirrer was added under stirring with a stirrer. Then, methanol was removed as in Example 1. When the amount of methanol was reduced, a white precipitate was generated. However, when heating under reduced pressure was continued, the generated precipitate was dissolved. It is considered that this change in solubility is caused by exchange of a Mg ligand from methanol to DnPS. Removal of methanol was confirmed by ¹H NMR measurement. In the sample after removal of methanol, cloudiness generated when MgCl₂ was dissolved in methanol remained, and therefore filtration (pore diameter 0.45 µm; manufactured by Whatman plc) was performed in the glove box. The obtained electrolytic solution had Mg: Cl: DnPS = 1: 2: 8 (molar ratio).

Even in the Mg electrolytic solution (Mg-EnPS-toluene), the Mg electrolytic solution (Mg-EnPS-BF₄), the Mg electrolytic solution (Mg-EiPS), and the Mg electrolytic solution (Mg-DnPS), in a case where the moisture content of the electrolytic solution was more than 10 ppm and less than 500 ppm, excellent cycle characteristics could be obtained as in Example 1.

Even in a case of using MgX₂ (X = Br or I) in place of MgCl₂ in Example 1, in a case where the moisture content of the electrolytic solution was more than 10 ppm and less than 500 ppm, excellent cycle characteristics could be obtained as in Example 1. Furthermore, even in a case of using the above-described other magnesium salt, in a case where the moisture content of the electrolytic solution was more than 10 ppm and less than 500 ppm, excellent cycle characteristics could be obtained as in Example 1.

### [Example 3]

Example 3 is also a modification of Example 1, but relates to the electrolytic solution according to the second mode of the present disclosure.

The electrolytic solution of Example 3 contains an ether and a magnesium salt dissolved in the ether. Here, the magnesium salt includes Mg(AlCl₃R¹)₂ or Mg(AlCl₂R²R³)₂ (in which R¹, R², and R³ are each an alkyl group), and is more specifically including Mg(AlCl₂Et₂)₂ in Example 3. Furthermore, the ether includes a cyclic ether or a linear ether (specifically, including a cyclic ether in Example 3), and is more specifically including tetrahydrofuran (THF).

MgCl₂, diethylaluminum chloride (Et₂AlCl), and THF were mixed at a molar ratio of 1: 2: 50, and the resulting mixture was heated and stirred at 60°C for 48 hours to prepare the electrolytic solution of Example 3.

Incidentally, the moisture content in a state in which water was not added was 10 ppm.

In addition, also in Example 3, a magnesium secondary battery (coin battery CR2016 type) containing sulfur (S) in a positive electrode (that is, containing a positive electrode using Mo₆S₈ as a positive electrode active material) and containing magnesium in a negative electrode was manufactured. A relationship between the moisture content of the electrolytic solution and cycle characteristics was examined. Specifically, the coin battery was manufactured using a negative electrode including a magnesium (Mg) plate having a thickness of 1.5 mm and a positive electrode including Mo₆S₈ (90% by mass), a conductive auxiliary agent (7% by mass), and a binder (3% by mass PVdF). Test conditions are indicated in Table 2 below.

**<Table 2>**

| | |
|---|---|
| Discharge condition: | 0.1 mA/cutoff voltage 0.2 V |
| Charge condition: | 0.1 mA/cutoff voltage 2.0 V |

The state in which the coin battery 10 is disassembled is similar to the state described in Example 1. The electrolytic solution includes Mg(AlCl₂Et₂)₂: THF ≈ = 1: 50 (molar ratio), and contains a predetermined amount of water added. Incidentally, the salt concentration as the electrolytic solution is 0.25 mol per liter of THF.

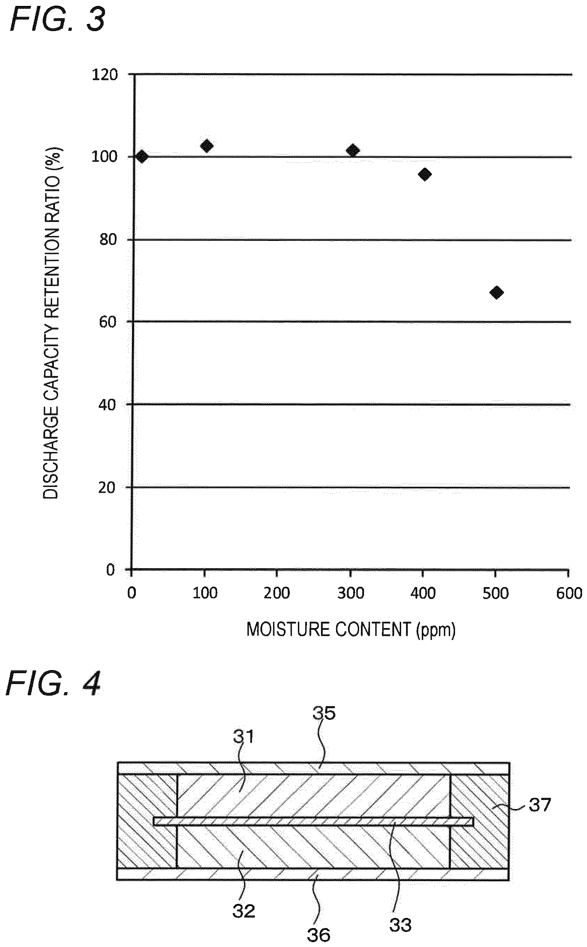

In addition, Fig. 3 illustrates a graph obtained by plotting a discharge capacity (expressed as "discharge capacity retention ratio") at a fifth cycle of a charge/discharge cycle in each of samples having various moisture contents when the discharge capacity at the fifth cycle of the charge/discharge cycle of a sample having a moisture content of 10 ppm in a state in which no water is added is assumed to be 100%. The magnesium secondary battery of Example 3 has a moisture content of more than 10 ppm, and maintains a high capacity retention ratio up to 300 ppm.

### [Example 4]

Example 4 is a modification of Examples 1 to 3. As illustrated in the schematic cross-sectional view of Fig. 4, an electrochemical device of Example 4 includes a capacitor, and has a positive electrode 31 and a negative electrode 32 disposed facing each other through a separator 33 impregnated with any one of the electrolytic solutions of Examples 1 to 3. Incidentally, a gel electrolyte film impregnated with any one of the electrolytic solutions of Examples 1 to 3 may be disposed on at least one surface of the separator 33, the positive electrode 31, and the negative electrode 32. Reference numerals 35 and 36 denote current collectors, and reference numeral 37 denotes a gasket.

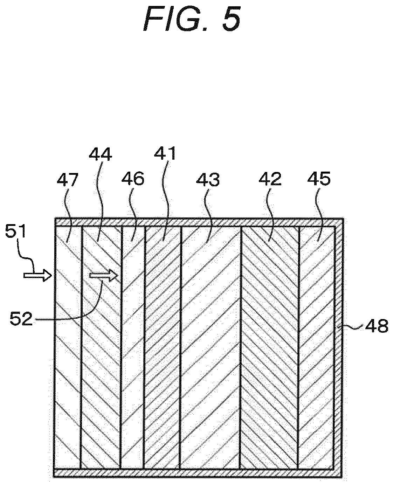

Alternatively, the electrochemical device of Example 4 includes an air battery, as illustrated in the conceptual diagram of Fig. 5. This air battery includes, for example, an oxygen selective permeable membrane 47 which hardly transmits water vapor and selectively transmits oxygen, an air electrode side current collector 44 including a conductive porous material, a porous diffusion layer 46 disposed between the air electrode side current collector 44 and a porous positive electrode 41 and including a conductive material, the porous positive electrode 41 containing a conductive material and a catalyst material, a separator which hardly transmits water vapor, an electrolytic solution (or solid electrolyte containing an electrolytic solution) 43, a negative electrode 42 which releases a magnesium ion, a negative electrode side current collector 45, and an exterior body 48 which houses these layers.

The oxygen 52 in air (atmosphere) 51 is selectively transmitted by the oxygen selective permeable membrane 47, passes through the air electrode side current collector 44 including a porous material, is diffused by the diffusion layer 46, and is supplied to the porous positive electrode 41. Progress of oxygen which has passed through the oxygen selective permeable membrane 47 is partially shielded by the air electrode side current collector 44, but oxygen which has passed through the air electrode side current collector 44 is diffused by the diffusion layer 46 and spreads. Therefore, oxygen is efficiently distributed throughout the porous positive electrode 41, and supply of oxygen to the entire surface of the porous positive electrode 41 is not obstructed by the air electrode side current collector 44. Furthermore, permeation of water vapor is suppressed by the oxygen selective permeable membrane 47. Therefore, deterioration due to an influence of moisture in air is small and oxygen is efficiently supplied to the entire porous positive electrode 41. Therefore, a battery output can be increased, and the battery can be used stably for a long period of time.

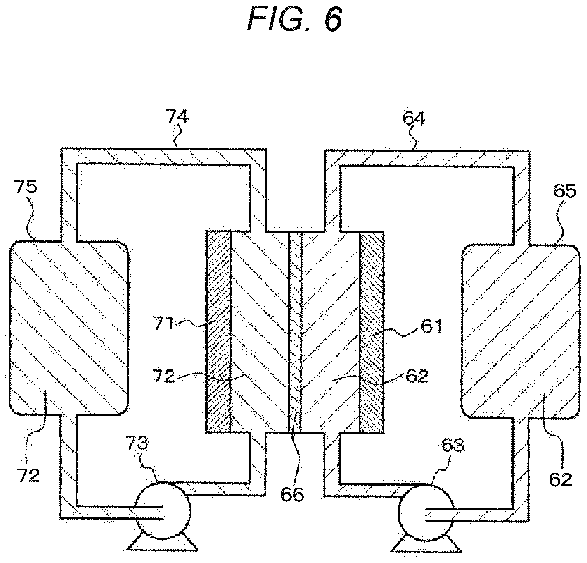

Alternatively, the electrochemical device of Example 4 includes a fuel battery as illustrated in the conceptual diagram of Fig. 6. This fuel battery includes, for example, a positive electrode 61, a positive electrode electrolytic solution 62, a positive electrode electrolytic solution transport pump 63, a fuel flow path 64, a positive electrode electrolytic solution storage container 65, a negative electrode 71, a negative electrode electrolytic solution 72, a negative electrode electrolytic solution transport pump 73, a fuel flow path 74, a negative electrode electrolytic solution storage container 75, and an ion exchange film 66. In the fuel flow path 64, the positive electrode electrolytic solution 62 continuously or intermittently flows (circulates) through the positive electrode electrolytic solution storage container 65 and the positive electrode electrolytic solution transport pump 63. In the fuel flow path 74, the negative electrode electrolytic solution 72 continuously or intermittently flows (circulates) through the negative electrode electrolytic solution storage container 75 and the negative electrode electrolytic solution transport pump 73. Power is generated between the positive electrode 61 and the negative electrode 71. As the positive electrode electrolytic solution 62, a solution obtained by adding a positive electrode active material to each of the electrolytic solutions of Examples 1 to 3 can be used.
As the negative electrode electrolytic solution 72, a solution obtained by adding a negative electrode active material to each of the electrolytic solutions of Examples 1 to 3 can be used.

The negative electrode in the electrochemical device can also be manufactured by the following method. That is, a Mg electrolytic solution (Mg-EnPS) containing MgCl₂ and EnPS (ethyl-n-propylsulfone) at a ratio of MgCl₂: EnPS = 1: 8 (molar ratio) was prepared. Using this Mg electrolytic solution, Mg metal is precipitated on a Cu foil on the basis of an electrolytic plating method to form a Mg plating layer on the Cu foil as an active material layer in the negative electrode. As a result of analyzing the surface of the Mg plating layer obtained in this way on the basis of the XPS method, it has become clear that Mg, C, O, S, and Cl existed on the surface of the Mg plating layer. Furthermore, a Mg-derived peak observed in surface analysis was not divided, and a single peak derived from Mg was observed in a range of 40 eV or more and 60 eV or less. Furthermore, the surface of the Mg plating layer was drilled in a depth direction by about 200 nm on the basis of an Ar sputtering method, and the surface was analyzed on the basis of the XPS method. As a result, it became clear that the position and shape of the Mg-derived peak after Ar sputtering had no change compared to the position and shape of the peak before Ar sputtering. Even in a case of using a Mg electrolytic solution containing MgBr₂ and EnPS at a ratio of MgBr₂: EnPS = 1: 8 (molar ratio) or a Mg electrolytic solution containing MgBr₂ and EiPS (ethyl-i-propylsulfone) at a ratio of MgBr₂: EiPS = 1: 8 (molar ratio), a similar result could be obtained.

### [Example 5]

In Example 5, the electrochemical device (specifically, a magnesium secondary battery) of the present disclosure and an application example thereof will be described.

The magnesium secondary battery as described in Examples 1 to 3 in the present disclosure can be applied to a machine, a device, an appliance, an apparatus, and a system (an assembly of a plurality of devices or the like) which can be used as a power source for driving/operating the secondary battery or a power storage source for accumulating power without any particular limitation. The magnesium secondary battery (specifically, magnesium-sulfur secondary battery) used as a power source may be a main power source (power source used preferentially) or an auxiliary power source (power source used in place of a main power source, or by switching from the main power source). In a case of using a magnesium secondary battery as an auxiliary power source, a main power source is not limited to a magnesium secondary battery.

Specific examples of an application of the magnesium secondary battery (specifically, magnesium-sulfur secondary battery) in the present disclosure include various electronic devices and electrical devices (including a portable electronic device) such as a video camera, a camcorder, a digital still camera, a mobile phone, a personal computer, a television receiver, various display devices, a cordless phone, a headphone stereo, a music player, a portable radio, electronic paper such as an electronic book or an electronic newspaper, or a portable information terminal including PDA; a toy; a portable living appliance such as an electric shaver; a lighting appliance such as an interior light; a medical electronic device such as a pacemaker or a hearing aid; a storage device such as a memory card; a battery pack used as a detachable power source for a personal computer or the like; an electric tool such as an electric drill or an electric saw; a power storage system or a home energy server (household power storage device) such as a household battery system for accumulating power in preparation for emergency or the like and a power supply system; a power storage unit and a backup power source; an electric vehicle such as an electric car, an electric motorcycle, an electric bicycle, or Segway (registered trademark); and a power driving force conversion device of an airplane or a ship (specifically, for example, a power motor), but are not limited to these applications.

Among these applications, the magnesium secondary battery in the present disclosure is effectively applied to a battery pack, an electric vehicle, a power storage system, a power supply system, an electric tool, an electronic device, an electrical device, or the like. The battery pack is a power source using the magnesium secondary battery in the present disclosure, and is a so-called assembled battery or the like. The electric vehicle is a vehicle which operates (travels) using the magnesium secondary battery in the present disclosure as a driving power source, and may be a car (hybrid car or the like) also including a driving source other than the secondary battery. The power storage system (power supply system) is a system using the magnesium secondary battery in the present disclosure as a power storage source. For example, in the household power storage system (power supply system), power is accumulated in the magnesium secondary battery in the present disclosure as a power storage source, and therefore household electrical products or the like can be used using power. The electric tool is a tool in which a movable portion (for example, a drill) can move using the magnesium secondary battery in the present disclosure as a driving power source. The electronic device and the electrical device are devices that exhibit various functions using the magnesium secondary battery in the present disclosure as a power source (power supply source) for operation.

Hereinafter, a cylinder type magnesium secondary battery and a flat plate type laminated film type magnesium secondary battery will be described.

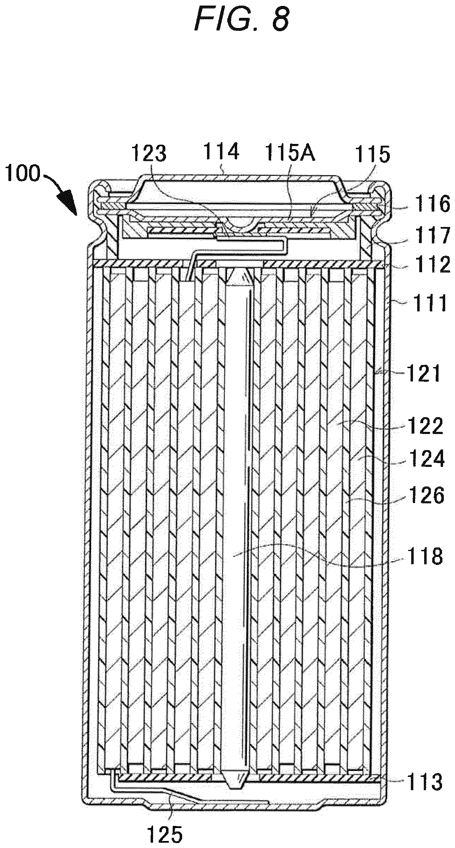

Fig. 8 illustrates a schematic cross-sectional view of a cylinder type magnesium secondary battery 100. In the magnesium secondary battery 100, an electrode structure 121 and a pair of insulating plates 112 and 113 are housed inside a substantially hollow columnar electrode structure housing member 111. The electrode structure 121 can be manufactured, for example, by laminating a positive electrode 122 and a negative electrode 124 through a separator 126 to obtain an electrode structure and then winding the electrode structure. The electrode structure housing member (battery can) 111 has a hollow structure in which one end is closed and the other end is open, and includes iron (Fe), aluminum (Al), or the like. Nickel (Ni) or the like may be plated on a surface of the electrode structure housing member 111. The pair of insulating plates 112 and 113 is disposed so as to sandwich the electrode structure 121 and to extend perpendicularly to a winding circumferential surface of the electrode structure 121. A battery lid 114, a safety valve mechanism 115, and a positive temperature coefficient element (PTC element) 116 are crimped to the open end of the electrode structure housing member 111 through a gasket 117, and the electrode structure housing member 111 is thereby sealed. For example, the battery lid 114 includes a similar material to the electrode structure housing member 111. The safety valve mechanism 115 and the PTC element 116 are disposed inside the battery lid 114, and the safety valve mechanism 115 is electrically connected to the battery lid 114 through the PTC element 116. In the safety valve mechanism 115, when an internal pressure becomes a certain level or higher due to internal short circuit, external heating, or the like, a disk plate 115A is inverted. In addition, as a result, the electrical connection between the battery lid 114 and the electrode structure 121 is disconnected. In order to prevent abnormal heat generation due to a large amount of current, resistance of the PTC element 116 increases with an increase in temperature. For example, the gasket 117 includes an insulating material. A surface of the gasket 117 may be coated with asphalt or the like.

A center pin 118 is inserted into a winding center of the electrode structure 121. However, the center pin 118 does not have to be inserted into the winding center. A positive electrode lead portion 123 including a conductive material such as aluminum is connected to the positive electrode 122. Specifically, the positive electrode lead portion 123 is attached to a positive electrode current collector. A negative electrode lead portion 125 including a conductive material such as copper is connected to the negative electrode 124. Specifically, the negative electrode lead portion 125 is attached to a negative electrode current collector. The negative electrode lead portion 125 is welded to the electrode structure housing member 111 and is electrically connected to the electrode structure housing member 111. The positive electrode lead portion 123 is welded to the safety valve mechanism 115 and is electrically connected to the battery lid 114. Incidentally, in the example illustrated in Fig. 8, the negative electrode lead portion 125 is disposed at one place (outermost circumferential portion of the wound electrode structure), but may be disposed at two places (outermost circumference portion and innermost circumferential portion of the wound electrode structure).

The electrode structure 121 includes the positive electrode 122 having a positive electrode active material layer formed on a positive electrode current collector (specifically, on both surfaces of the positive electrode current collector) and the negative electrode 124 having a negative electrode active material layer formed on a negative electrode current collector (specifically, on both surfaces of the negative electrode current collector) laminated through the separator 126. The positive electrode active material layer is not formed in a region of the positive electrode current collector to which the positive electrode lead portion 123 is attached. The negative electrode active material layer is not formed in a region of the negative electrode current collector to which the negative electrode lead portion 125 is attached.

Specifications of the magnesium secondary battery 100 are exemplified in the following Table 3, but are not limited thereto.

**<Table 3>**

| | |
|---|---|
| positive electrode current collector | aluminum foil having a thickness of 20 µm |
| positive electrode active material layer positive electrode lead portion | thickness per surface 50 µm aluminum (Al) foil having a thickness of 100 µm |
| negative electrode current collector 1 | copper foil having a thickness of 20 µm |
| negative electrode active material layer negative electrode lead portion | thickness per surface 50 µm nickel (Ni) foil having a thickness of 100 µm |

For example, the magnesium secondary battery 100 can be manufactured on the basis of the following procedure.

That is, first, positive electrode active material layers are formed on both surfaces of a positive electrode current collector, and negative electrode active material layers are formed on both surfaces of the negative electrode current collector.

Thereafter, the positive electrode lead portion 123 is attached to the positive electrode current collector using a welding method or the like. Furthermore, the negative electrode lead portion 125 is attached to the negative electrode current collector by a welding method or the like. Subsequently, the positive electrode 122 and the negative electrode 124 are laminated through the separator 126 including a microporous polyethylene film having a thickness of 20 µm, and are wound (more specifically, the electrode structure (laminated structure) of the positive electrode 122/the separator 126/the negative electrode 124/the separator 126) is wound) to manufacture the electrode structure 121. Thereafter, a protective tape (not illustrated) is pasted on an outermost peripheral portion. Thereafter, the center pin 118 is inserted into a center of the electrode structure 121. Subsequently, the electrode structure 121 is housed inside the electrode structure housing member (battery can) 111 while the electrode structure 121 is sandwiched between the pair of insulating plates 112 and 113. In this case, a tip of the positive electrode lead portion 123 is attached to the safety valve mechanism 115, and a tip of the negative electrode lead portion 125 is attached to the electrode structure housing member 111 by a welding method or the like. Thereafter, any one of the electrolytic solutions of Examples 1 to 3 is injected on the basis of a depressurization method, and the separator 126 is impregnated with the electrolytic solution. Subsequently, the battery lid 114, the safety valve mechanism 115, and the PTC element 116 are crimped to an open end of the electrode structure housing member 111 through the gasket 117.

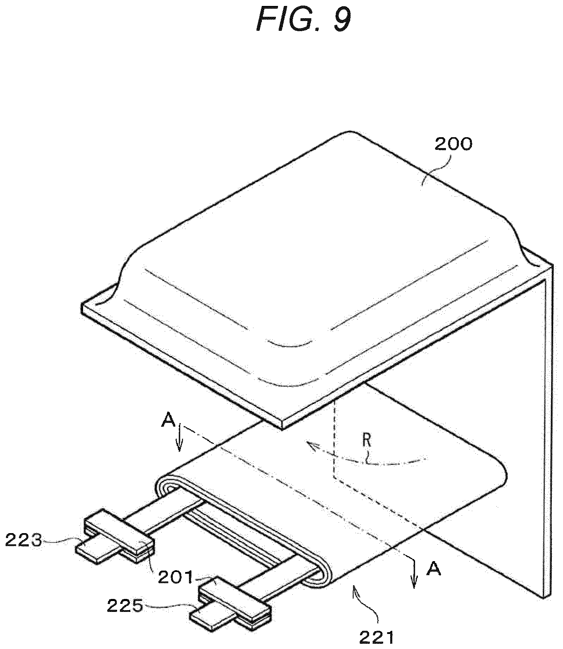

Next, the flat plate type laminated film type secondary battery will be described. Fig. 9 illustrates a schematic exploded perspective view of the secondary battery. In this secondary battery, an electrode structure 221 basically similar to that described above is housed inside an exterior member 200 including a laminated film. The electrode structure 221 can be manufactured by laminating a positive electrode and a negative electrode through a separator and an electrolyte layer and then winding this laminated structure. A positive electrode lead portion 223 is attached to the positive electrode, and a negative electrode lead portion 225 is attached to the negative electrode. An outermost peripheral portion of the electrode structure 221 is protected by a protective tape. The positive electrode lead portion 223 and the negative electrode lead portion 225 protrude in the same direction from an inside to an outside of the exterior member 200. The positive electrode lead portion 223 includes a conductive material such as aluminum. The negative electrode lead portion 225 includes a conductive material such as copper, nickel, or stainless steel.

The exterior member 200 is a single film foldable in a direction of the arrow R illustrated in Fig. 9, and has a recess (emboss) for housing the electrode structure 221 in a part of the exterior member 200. For example, the exterior member 200 is a laminated film obtained by laminating a fusion layer, a metal layer, and a surface protective layer in this order. In a step of manufacturing the secondary battery, the exterior member 200 is folded such that the fusion layers face each other through the electrode structure 221, and then outer peripheral edges of the fusion layers are fused to each other. However, the exterior member 200 may be obtained by bonding two laminated films through an adhesive or the like. For example, the fusion layer includes a film of polyethylene or polypropylene. For example, the metal layer includes an aluminum foil. For example, the surface protective layer includes nylon or polyethylene terephthalate. Among these examples, the exterior member 200 is preferably an aluminum laminated film obtained by laminating a polyethylene film, an aluminum foil, and a nylon film in this order. However, the exterior member 200 may be a laminated film having another laminated structure, a polymer film such as polypropylene, or a metallic film. Specifically, the exterior member 200 includes a moisture-resistant aluminum laminated film (total thickness 100 µm) obtained by laminating a nylon film (thickness 30 µm), an aluminum foil (thickness 40 µm), and an unstretched polypropylene film (thickness 30 µm) in this order from an outside.

In order to prevent entry of outside air, an adhesive film 201 is inserted between the exterior member 200 and the positive electrode lead portion 223 and between the exterior member 200 and the negative electrode lead portion 225. The adhesive film 201 includes a material having adhesiveness to the positive electrode lead portion 223 and the negative electrode lead portion 225, for example, a polyolefin resin, more specifically, a polyolefin resin such as polyethylene, polypropylene, modified polyethylene, or modified polypropylene.

Next, several application examples of the magnesium secondary battery in the present disclosure will be specifically described. Incidentally, configurations of application examples described below are merely examples, and can be appropriately changed.

A battery pack is a simple type battery pack (so-called soft pack) using one of the magnesium secondary batteries in the present disclosure, and is mounted on an electronic device typified by a smartphone, for example. Alternatively, the battery pack includes an assembled battery including six magnesium secondary batteries connected in two parallel and three series in the present disclosure. Incidentally, the connection form of the magnesium secondary batteries may be a series form, a parallel form, or a mixed form thereof.

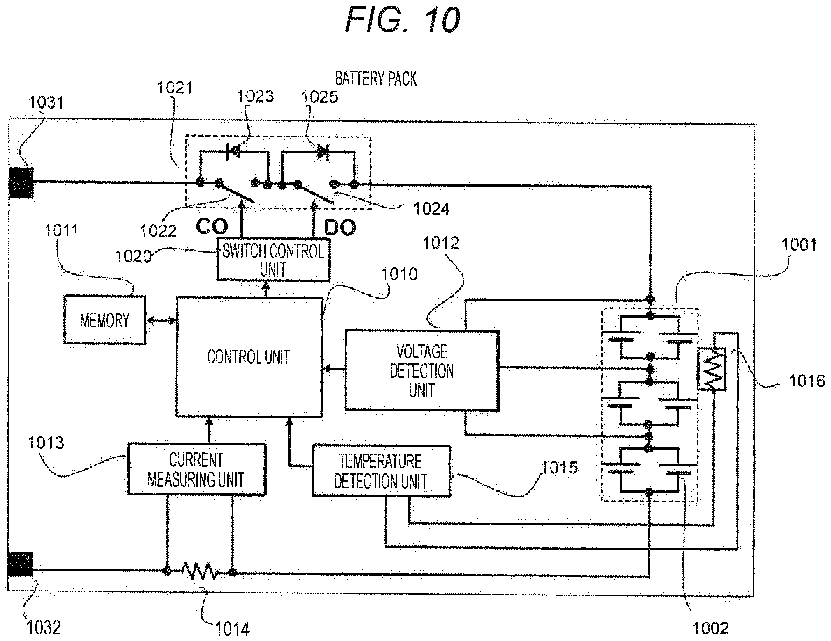

Fig. 10 illustrates a block diagram illustrating a circuit configuration example in a case where the magnesium secondary battery in the present disclosure is applied to a battery pack. The battery pack includes a cell (assembled battery) 1001, an exterior member, a switch unit 1021, a current detection resistor 1014, a temperature detection element 1016, and a control unit 1010. The switch unit 1021 includes a charge control switch 1022 and a discharge control switch 1024. Furthermore, the battery pack includes a positive electrode terminal 1031 and a negative electrode terminal 1032. At the time of charging, the positive electrode terminal 1031 and the negative electrode terminal 1032 are connected to a positive electrode terminal and a negative electrode terminal of a charger, respectively, and are charged. Furthermore, at the time of using an electronic device, the positive electrode terminal 1031 and the negative electrode terminal 1032 are connected to a positive electrode terminal and a negative electrode terminal of the electronic device, respectively, and are discharged.

The cell 1001 is constituted by connecting a plurality of magnesium secondary batteries 1002 in the present disclosure in series and/or in parallel. Incidentally, Fig. 10 illustrates a case where the six magnesium secondary batteries 1002 are connected in two parallel and three series (2P3S). However, any other connection method such as p parallel and q series (in which p and q are integers) may be used.

The switch unit 1021 includes the charge control switch 1022, a diode 1023, the discharge control switch 1024, and a diode 1025, and is controlled by the control unit 1010. The diode 1023 has a backward polarity with respect to a charge current flowing in a direction from the positive electrode terminal 1031 to the cell 1001, and a forward polarity with respect to a discharge current flowing in a direction from the negative electrode terminal 1032 to the cell 1001. The diode 1025 has a forward polarity with respect to the charge current and a backward polarity with respect to the discharge current. Incidentally, in the example, the switch unit is disposed on a plus (+) side, but may be disposed on a minus (-) side. The control unit 1010 controls the charge control switch 1022 such that the charge control switch 1022 is closed in a case where a battery voltage reaches an overcharge detection voltage, and no charge current flows in a current path of the cell 1001. After the charge control switch 1022 is closed, only discharge can be performed through the diode 1023. Furthermore, the control unit 1010 controls the charge control switch 1022 such that the charge control switch 1022 is closed in a case where a large amount of current flows during charging, and a charge current flowing in a current path of the cell 1001 is cut off. The control unit 1010 controls the discharge control switch 1024 such that the discharge control switch 1024 is closed in a case where a battery voltage reaches an overdischarge detection voltage, and no discharge current flows in a current path of the cell 1001. After the discharge control switch 1024 is closed, only charge can be performed through the diode 1025. Furthermore, the control unit 1010 controls the discharge control switch 1024 such that the discharge control switch 1024 is closed in a case where a large amount of current flows during discharging, and a discharge current flowing in a current path of the cell 1001 is cut off.

For example, the temperature detection element 1016 includes a thermistor, and is disposed in the vicinity of the cell 1001. A temperature measuring unit 1015 measures the temperature of the cell 1001 using the temperature detection element 1016, and sends a measurement result to the control unit 1010. A voltage measuring unit 1012 measures the voltage of the cell 1001 and the voltage of each of the magnesium secondary batteries 1002 constituting the cell 1001, performs A/D conversion of a measurement result, and sends the converted result to the control unit 1010. A current measuring unit 1013 measures a current using the current detection resistor 1014, and sends a measurement result to the control unit 1010.

A switch control unit 1020 controls the charge control switch 1022 and the discharge control switch 1024 of the switch unit 1021 on the basis of a voltage and a current sent from the voltage measuring unit 1012 and the current measuring unit 1013. When a voltage of any one of the magnesium secondary batteries 1002 becomes equal to or lower than the overcharge detection voltage or overdischarge detection voltage or when a large amount of current rapidly flows, the switch control unit 1020 sends a control signal to the switch unit 1021, and thereby prevents overcharge, overdischarge, and overcurrent charge/discharge. The charge control switch 1022 and the discharge control switch 1024 can be constituted by a semiconductor switch such as a MOSFET. In this case, the diodes 1023 and 1025 are constituted by parasitic diodes of a MOSFET. In a case where a p-channel type FET is used as a MOSFET, the switch control unit 1020 supplies a control signal DO and a control signal CO to a gate portion of each of the charge control switch 1022 and the discharge control switch 1024. The charge control switch 1022 and the discharge control switch 1024 become conductive due to a gate potential lower than a source potential by a predetermined value or more. That is, in normal charging and discharging operation, each of the control signal CO and the control signal DO is set to a low level, and the charge control switch 1022 and the discharge control switch 1024 are caused to be conductive. In addition, for example, during overcharge or overdischarge, each of the control signal CO and the control signal DO is set to a high level, and the charge control switch 1022 and the discharge control switch 1024 are closed.

For example, the memory 1011 includes an erasable programmable read only memory (EPROM) which is a nonvolatile memory. In the memory 1011, a numerical value calculated by the control unit 1010, an internal resistance value of each of the magnesium secondary batteries 1002 in an initial state, measured at a stage of a manufacturing step, and the like are previously stored, and can be rewritten appropriately. Furthermore, by causing the memory 1011 to store a full charge capacity of each of the magnesium secondary batteries 1002, the memory 1011 can calculate a remaining capacity together with the control unit 1010, for example.

The temperature measuring unit 1015 measures a temperature using the temperature detection element 1016, performs charge/discharge control at the time of abnormal heat generation, and performs correction in calculating the remaining capacity.

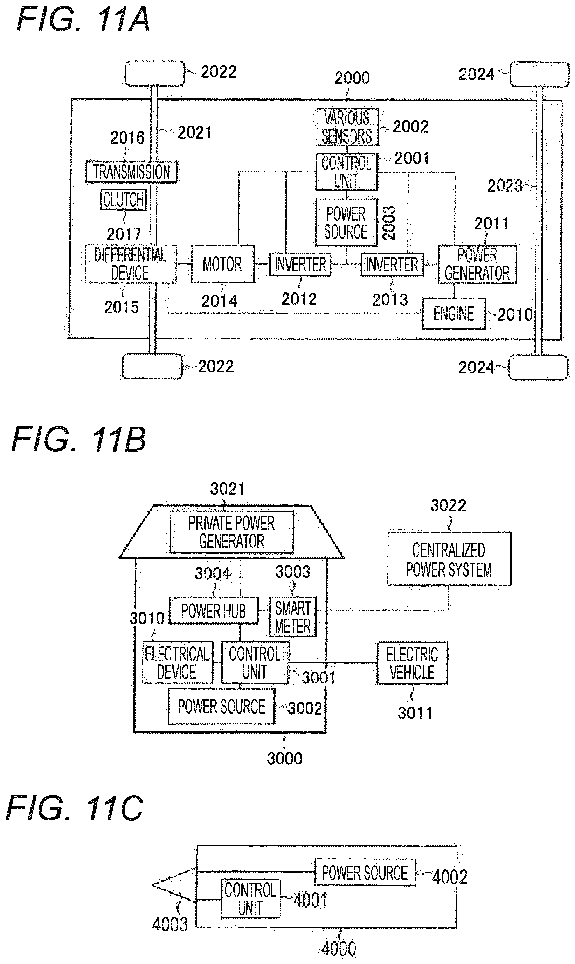

Next, Fig. 11A illustrates a block diagram illustrating a configuration of an electric vehicle such as a hybrid car which is an example of an electric vehicle. For example, the electric vehicle includes a control unit 2001, various sensors 2002, a power source 2003, an engine 2010, a power generator 2011, inverters 2012 and 2013, a driving motor 2014, a differential device 2015, a transmission 2016, and a clutch 2017 in a housing 2000 made of metal. In addition, for example, the electric vehicle includes a front wheel drive shaft 2021, a front wheel 2022, a rear wheel drive shaft 2023, and a rear wheel 2024 connected to the differential device 2015 or the transmission 2016.

For example, the electric vehicle can travel using either the engine 2010 or the motor 2014 as a drive source. The engine 2010 is a main power source, and is a gasoline engine, for example. In a case where the engine 2010 is used as a power source, for example, a driving force (rotational force) of the engine 2010 is transmitted to the front wheel 2022 or the rear wheel 2024 through the differential device 2015, the transmission 2016, and the clutch 2017 which are drive units. The rotational force of the engine 2010 is also transmitted to the power generator 2011. The power generator 2011 generates AC power using the rotational force. The AC power is converted into DC power through the inverter 2013. The DC power is accumulated in the power source 2003. Meanwhile, in a case where the motor 2014 which is a conversion unit is used as a power source, power (DC power) supplied from the power source 2003 is converted into AC power through the inverter 2012, and the motor 2014 is driven using the AC power. The driving force (rotational force) converted from the power by the motor 2014 is transmitted to the front wheel 2022 or the rear wheel 2024 through the differential device 2015, the transmission 2016, and the clutch 2017 which are drive units, for example.

When the electric vehicle decelerates through a braking mechanism (not illustrated), a resistance force at the time of deceleration is transmitted to the motor 2014 as a rotational force, and the motor 2014 may generate AC power using this rotational force. The AC power is converted into DC power through the inverter 2012, and the DC regenerative power is accumulated in the power source 2003.

The control unit 2001 controls operation of the entire electric vehicle, and includes a CPU, for example. The power source 2003 includes one or more magnesium secondary batteries (not illustrated) described in Examples 1 to 3. The power source 2003 may have a configuration to accumulate power by being connected to an external power source and receiving power from the external power source. For example, the various sensors 2002 are used in order to control the rotation number of the engine 2010 and to control an opening degree of a throttle valve (throttle opening degree) (not illustrated). The various sensors 2002 include a speed sensor, an acceleration sensor, and an engine rotation number sensor, for example.

Incidentally, a case where the electric vehicle is a hybrid car has been described. However, the electric vehicle may be a vehicle (electric car) which operates using only the power source 2003 and the motor 2014 without using the engine 2010.

Next, Fig. 11B illustrates a block diagram illustrating a configuration of a power storage system (power supply system). For example, the power storage system includes a control unit 3001, a power source 3002, a smart meter 3003, and a power hub 3004 inside a house 3000 such as a general house or a commercial building.

For example, the power source 3002 is connected to an electrical device (electronic device) 3010 installed inside the house 3000, and can be connected to an electric vehicle 3011 which stops outside the house 3000. Furthermore, for example, the power source 3002 is connected to a private power generator 3021 installed in the house 3000 through a power hub 3004, and can be connected to an external centralized power system 3022 through the smart meter 3003 and the power hub 3004. For example, the electrical device (electronic device) 3010 includes one or more household electric appliances. Examples of the household electric appliances include a refrigerator, an air conditioner, a television receiver, and a water heater. For example, the private power generator 3021 is constituted by a solar power generator or a wind power generator. Examples of the electric vehicle 3011 include an electric car, a hybrid car, an electric motorcycle, an electric bicycle, and a Segway (registered trademark). Examples of the centralized power system 3022 include a commercial power source, a power generation device, a power transmission network, and a smart grid (next generation power transmission network). Furthermore, examples thereof include a thermal power plant, a nuclear power plant, a hydropower plant, and a wind power plant. Examples of the power generation device included in the centralized power system 3022 include various solar batteries, a fuel battery, a wind power generation device, a micro hydropower generation device, and a geothermal power generation device. However, the centralized power system 3022 and the power generation device are not limited thereto.

The control unit 3001 controls operation of the entire power storage system (including a use state of the power source 3002), and includes a CPU, for example. The power source 3002 includes one or more magnesium secondary batteries (not illustrated) described in Examples 1 to 3. For example, the smart meter 3003 is a network-compliant power meter installed in the house 3000 on a power demand side, and can communicate with a power supply side. In addition, for example, the smart meter 3003 controls a balance between demand and supply in the house 3000 while communicating with an outside, and can thereby supply energy efficiently and stably.

In this power storage system, for example, power is accumulated in the power source 3002 from the centralized power system 3022 which is an external power source through the smart meter 3003 and the power hub 3004, and power is accumulated in the power source 3002 from the private power generator 3021 which is an independent power source through the power hub 3004. The power accumulated in the power source 3002 is supplied to the electrical device (electronic device) 3010 and the electric vehicle 3011 according to an instruction of the control unit 3001. Therefore, the electrical device (electronic device) 3010 can be operated, and the electric vehicle 3011 can be charged. That is, the power storage system is a system which makes it possible to accumulate and supply power in the house 3000 using the power source 3002.

The power accumulated in the power source 3002 can be arbitrarily used. Therefore, for example, power is accumulated in the power source 3002 from the centralized power system 3022 at midnight when electricity charge is inexpensive, and the power accumulated in the power source 3002 can be used during the day when the electricity charge is high.

The power storage system described above may be installed in every single house (one household) or may be installed in every two or more houses (two or more households).

Next, Fig. 11C illustrates a block diagram illustrating a configuration of the electric tool. For example, the electric tool is an electric drill, and includes a control unit 4001 and a power source 4002 inside a tool body 4000 including a plastic material or the like. For example, a drill portion 4003 which is a movable portion is rotatably attached to the tool body 4000. The control unit 4001 controls operation of the entire electric tool (including a use state of the power source 4002), and includes a CPU, for example. The power source 4002 includes one or more magnesium secondary batteries (not illustrated) described in Examples 1 to 3. The control unit 4001 supplies power from the power source 4002 to the drill portion 4003 in response to operation of an operation switch (not illustrated).

Hitherto, the present disclosure has been described on the basis of preferable Examples. However, the present disclosure is not limited to these Examples. The composition of the electrolytic solution, the raw materials used in manufacturing, the manufacturing method, the manufacturing conditions, the characteristics of the electrolytic solution, and the configuration and structure of the electrochemical device and the battery, described in Examples, are illustrative, are not limited thereto, and can be changed appropriately. The electrolytic solution of the present disclosure can be used as a gel electrolyte by mixing the electrolytic solution with an organic polymer (for example, polyethylene oxide, polyacrylonitrile, or polyvinylidene fluoride (PVdF)).

The electrolytic solution described in Example 1 can be used as the above-described plating bath for electroplating magnesium. Incidentally, examples of a magnesium salt constituting the plating bath for electroplating magnesium include magnesium salt-A and magnesium salt-B described above. In addition, such a plating bath can be obtained by dissolving a magnesium salt in a low boiling point solvent capable of dissolving the magnesium salt, then dissolving a sulfone (specifically, the sulfones described above) in the solution obtained by dissolving the magnesium salt in the low boiling point solvent, and then removing the low boiling point solvent from the solution in which the sulfone is dissolved.

As the low boiling point solvent capable of dissolving a magnesium salt, basically, any solvent can be used as long as being a solvent having a boiling point lower than a sulfone selected among solvents capable of dissolving the magnesium salt, but the alcohols described above are preferably used. Furthermore, the above-described plating bath may contain the additives described above. By adding such an additive, ionic conductivity of the plating bath can be improved. Furthermore, the above-described plating bath may contain various nonpolar solvents as described above. That is, a nonpolar solvent may be mixed with the plating bath. The nonpolar solvent functions as a kind of diluent.

Incidentally, the present disclosure may have the following configurations.

### [A01] <<Electrolytic solution>>

An electrolytic solution for an electrochemical device including a negative electrode including a magnesium-based material, having a moisture content of more than 10 ppm and less than 500 ppm.

[A02] The electrolytic solution according to [A01], in which the moisture content is more than 10 ppm and 300 ppm or less.

[A03] An electrolytic solution according to [A01] or [A02], containing a sulfone and a magnesium salt dissolved in the sulfone.

[A04] The electrolytic solution according to [A03], in which the magnesium salt includes MgXₙ (in which n is 1 or 2, and X is a monovalent or divalent anion).

[A05] The electrolytic solution according to [A04], in which X includes a molecule containing a halogen, -SO₄, -NO₃, or a hexaalkyldisiazide group.

[A06] The electrolytic solution according to [A05], in which the molecule containing a halogen includes MgX₂ (X = Cl, Br, or I).

[A07] The electrolytic solution according to [A05], in which the magnesium salt is at least one magnesium salt selected from the group consisting of magnesium perchlorate (Mg (ClO₄)₂), magnesium nitrate (Mg(NO₃)₂), magnesium sulfate (MgSO₄), magnesium tetrafluoroborate (Mg(BF₄)₂), magnesium tetraphenylborate (Mg (B(C₆H₅)₄)₂), magnesium hexafluorophosphate (Mg(PF₆)₂), magnesium hexafluoroarsenate (Mg(AsF₆)₂), magnesium perfluoroalkylsulfonate (Mg(R_{f1}SO₃)₂) <in which R_{f1} is a perfluoroalkyl group>, magnesium perfluoroalkylsulfonylimide (Mg((R_{f2}SO₂)₂N)₂) <in which R_{f2} is a perfluoroalkyl group>, and magnesium hexaalkyl disilazide (Mg(HRDS)₂) <in which R is an alkyl group>.

[A08] The electrolytic solution according to any one of [A03] to [A07], in which the sulfone is an alkylsulfone represented by R₁R₂SO₂ (in which R₁ and R₂ each represent an alkyl group) or an alkylsulfone derivative.

[A09] The electrolytic solution according to [A08], in which the alkylsulfone is at least one alkylsulfone selected from the group consisting of dimethylsulfone, methylethylsulfone, methyl-n-propylsulfone, methyl-i-propylsulfone, methyl-n-butylsulfone, methyl-i-butylsulfone, methyl-s-butylsulfone, methyl-t-butylsulfone, ethylmethylsulfone, diethylsulfone, ethyl-n-propylsulfone, ethyl-i-propylsulfone, ethyl-n-butylsulfone, ethyl-i-butylsulfone, ethyl-s-butylsulfone, ethyl-t-butylsulfone, di-n-propylsulfone, di-i-propylsulfone, n-propyl-n-butylsulfone, n-butylethylsulfone, i-butylethylsulfone, s-butylethylsulfone, and di-n-butylsulfone, and the alkyl sulfone derivative is ethylphenylsulfone.

[A10] The electrolytic solution according to [A01] or [A02], containing an ether (broadly, aprotic solvent) and a magnesium salt dissolved in the ether (aprotic solvent).

[A11] The electrolytic solution according to [A10], in which the magnesium salt includes Mg(AlCl₃R¹)₂ or Mg(AlCl₂R²R³)₂ (in which R¹, R², and R³ are each an alkyl group).

[A12] The electrolytic solution according to [A10] or [A11], in which the ether includes a cyclic ether or a linear ether.

[A13] The electrolytic solution according to [A12], in which the cyclic ether is at least one cyclic ether selected from the group consisting of tetrahydrofuran, dioxolane, dioxane, an epoxide, and a furan, and the linear ether is dialkyl glycol ether.

[A14] The electrolytic solution according to [A13], in which the dialkyl glycol ether is at least one dialkyl glycol ether selected from the group consisting of ethylene glycol dimethyl ether, diethylene glycol dimethyl ether, triethylene glycol dimethyl ether, tetraethylene glycol dimethyl ether, pentaethylene glycol dimethyl ether, hexaethylene glycol dimethyl ether, polyethylene glycol dimethyl ether, and triethylene glycol butyl methyl ether.

### [B01] «Electrochemical device»

An electrochemical device including a negative electrode including a magnesium-based material, including an electrolytic solution having a moisture content of more than 10 ppm and less than 500 ppm.

[B02] The electrochemical device according to [B01], in which the moisture content is more than 10 ppm and 300 ppm or less.

[B03] The electrochemical device according to [B01] or [B02], in which the electrolytic solution contains a sulfone and a magnesium salt dissolved in the sulfone.

[B04] The electrochemical device according to [B03], in which the magnesium salt includes MgXₙ (in which n is 1 or 2, and X is a monovalent or divalent anion).

[B05] The electrochemical device according to [B04], in which X includes a molecule containing a halogen, -SO₄, -NO₃, or a hexaalkyldisiazide group.

[B06] The electrochemical device according to [B05], in which the molecule containing a halogen includes MgX₂ (X = Cl, Br, or I).

[B07] The electrochemical device according to [B05], in which the magnesium salt is at least one magnesium salt selected from the group consisting of magnesium perchlorate (Mg(ClO₄)₂), magnesium nitrate (Mg(NO₃)₂), magnesium sulfate (MgSO₄), magnesium tetrafluoroborate (Mg(BF₄)₂), magnesium tetraphenylborate (Mg(B(C₆H₅)₄)₂), magnesium hexafluorophosphate (Mg(PF₆)₂), magnesium hexafluoroarsenate (Mg(AsF₆)₂), magnesium perfluoroalkylsulfonate (Mg(R_{f1}SO₃)₂) <in which R_{f1} is a perfluoroalkyl group>, magnesium perfluoroalkylsulfonylimide (Mg((R_{f2}SO₂)₂N)₂ <in which R_{f2} is a perfluoroalkyl group>, and magnesium hexaalkyl disilazide ((Mg(HRDS)₂) <in which R is an alkyl group>.

[B08] The electrochemical device according to any one of [B03] to [B07], in which the sulfone is an alkylsulfone represented by R₁R₂SO₂ (in which R₁ and R₂ each represent an alkyl group) or an alkylsulfone derivative.

[B09] The electrochemical device according to [B08], in which the alkylsulfone is at least one alkylsulfone selected from the group consisting of dimethylsulfone, methylethylsulfone, methyl-n-propylsulfone, methyl-i-propylsulfone, methyl-n-butylsulfone, methyl-i-butylsulfone, methyl-s-butylsulfone, methyl-t-butylsulfone, ethylmethylsulfone, diethylsulfone, ethyl-n-propylsulfone, ethyl-i-propylsulfone, ethyl-n-butylsulfone, ethyl-i-butylsulfone, ethyl-s-butylsulfone, ethyl-t-butylsulfone, di-n-propylsulfone, di-i-propylsulfone, n-propyl-n-butylsulfone, n-butylethylsulfone, i-butylethylsulfone, s-butylethylsulfone, and di-n-butylsulfone, and the alkyl sulfone derivative is ethylphenylsulfone.

[B10] The electrochemical device according to [B01] or [B02], in which the electrolytic solution contains an ether and a magnesium salt dissolved in the ether.

[B11] The electrochemical device according to [B10], in which the magnesium salt includes Mg(AlCl₃R¹)₂ or Mg(AlClR²R³)₂ (in which R¹, R², and R³ are each an alkyl group).

[B12] The electrochemical device according to [B10] or [B11], in which the ether includes a cyclic ether or a linear ether.

[B13] The electrochemical device according to [B12], in which the cyclic ether is at least one cyclic ether selected from the group consisting of tetrahydrofuran, dioxolane, dioxane, an epoxide, and a furan, and the linear ether is dialkyl glycol ether.

[B14] The electrochemical device according to [B13], in which the dialkyl glycol ether is at least one dialkyl glycol ether selected from the group consisting of ethylene glycol dimethyl ether, diethylene glycol dimethyl ether, triethylene glycol dimethyl ether, tetraethylene glycol dimethyl ether, pentaethylene glycol dimethyl ether, hexaethylene glycol dimethyl ether, polyethylene glycol dimethyl ether, and triethylene glycol butyl methyl ether.

[B15] The electrochemical device according to any one of [B01] to [B14], in which the electrochemical device is a battery having an electrolyte layer constituted by the electrolytic solution.

[B16] The electrochemical device according to [B15], in which the battery is a primary battery or a secondary battery.

[B17] The electrochemical device according to [B15] or [B16], in which the negative electrode includes magnesium, a magnesium alloy, or a magnesium compound.

[B18] The electrochemical device according to any one of [B15] to [B17], including a positive electrode using sulfur, graphite fluoride, a metal oxide, or a metal halide as a positive electrode active material.

[B19] The electrochemical device according to [B18], in which a metal constituting the metal oxide or the metal halide is scandium, titanium, vanadium, chromium, manganese, iron, cobalt, nickel, copper, zinc, or molybdenum.

[B20] The electrochemical device according to any one of [B15] to [B19], in which the battery includes a magnesium battery, an air battery, or a fuel battery.

[B21] The electrochemical device according to any one of [B01] to [B14], including a capacitor.

[B22] The electrochemical device according to [B21], in which the capacitor includes a positive electrode, a negative electrode, and a separator sandwiched between the positive electrode and the negative electrode and impregnated with the electrolytic solution.

[B23] The electrochemical device according to any one of [B01] to [B14], including a sensor or a magnesium ion filter.

### [C01] <<Secondary battery>>

A secondary battery including at least a negative electrode including a magnesium-based material and an electrolytic solution having a moisture content of more than 10 ppm and less than 500 ppm.

[C02] The secondary battery according to [C01], in which the moisture content is more than 10 ppm and 300 ppm or less.

[C03] The secondary battery according to [C01] or [C02], in which the electrolytic solution contains a sulfone and a magnesium salt dissolved in the sulfone.

[C04] The secondary battery according to [C03], in which the magnesium salt includes MgXₙ (in which n is 1 or 2, and X is a monovalent or divalent anion).

[C05] The secondary battery according to [C04], in which X includes a molecule containing a halogen, -SO₄, - NO₃, or a hexaalkyldisiazide group.

[C06] The secondary battery according to [C05], in which the molecule containing a halogen includes MgX₂ (X = Cl, Br, or I).

[C07] The secondary battery according to [C05], in which the magnesium salt is at least one magnesium salt selected from the group consisting of magnesium perchlorate (Mg (ClO₄)₂), magnesium nitrate (Mg(NO₃)₂), magnesium sulfate (MgSO₄), magnesium tetrafluoroborate (Mg(BF₄)₂), magnesium tetraphenylborate (Mg(B(C₆H₅)₄)₂), magnesium hexafluorophosphate (Mg(PF₆)₂), magnesium hexafluoroarsenate (Mg(AsF₆)₂), magnesium perfluoroalkylsulfonate (Mg(R_{f1}SO₃)₂)<in which R_{f1} is a perfluoroalkyl group>, magnesium perfluoroalkylsulfonylimide (Mg((R_{f2}SO₂)₂N)₂ <in which R_{f2} is a perfluoroalkyl group>, and magnesium hexaalkyl disilazide ((Mg(HRDS)₂) <in which R is an alkyl group>.

[C08] The secondary battery according to any one of [C03] to [C07], in which the sulfone is an alkylsulfone represented by R₁R₂SO₂ (in which R₁ and R₂ each represent an alkyl group) or an alkylsulfone derivative.

[C09] The secondary battery according to [C08], in which the alkylsulfone is at least one alkylsulfone selected from the group consisting of dimethylsulfone, methylethylsulfone, methyl-n-propylsulfone, methyl-i-propylsulfone, methyl-n-butylsulfone, methyl-i-butylsulfone, methyl-s-butylsulfone, methyl-t-butylsulfone, ethylmethylsulfone, diethylsulfone, ethyl-n-propylsulfone, ethyl-i-propylsulfone, ethyl-n-butylsulfone, ethyl-i-butylsulfone, ethyl-s-butylsulfone, ethyl-t-butylsulfone, di-n-propylsulfone, di-i-propylsulfone, n-propyl-n-butylsulfone, n-butylethylsulfone, i-butylethylsulfone, s-butylethylsulfone, and di-n-butylsulfone, and the alkyl sulfone derivative is ethylphenylsulfone.

[C10] The secondary battery according to [C01] or [C02], in which the electrolytic solution contains an ether and a magnesium salt dissolved in the ether.

[C11] The secondary battery according to [C10], in which the magnesium salt includes Mg(AlCl₃R¹)₂ or Mg(AlCl₂R²R³)₂ (in which R¹, R², and R³ are each an alkyl group) .

[C12] The secondary battery according to [C10] or [C11], in which the ether includes a cyclic ether or a linear ether.

[C13] The secondary battery according to [C12], in which the cyclic ether is at least one cyclic ether selected from the group consisting of tetrahydrofuran, dioxolane, dioxane, an epoxide, and a furan, and the linear ether is dialkyl glycol ether.

[C14] The secondary battery according to [C13], in which the dialkyl glycol ether is at least one dialkyl glycol ether selected from the group consisting of ethylene glycol dimethyl ether, diethylene glycol dimethyl ether, triethylene glycol dimethyl ether, tetraethylene glycol dimethyl ether, pentaethylene glycol dimethyl ether, hexaethylene glycol dimethyl ether, polyethylene glycol dimethyl ether, and triethylene glycol butyl methyl ether.

[C15] The secondary battery according to any one of [C01] to [C14], in which the negative electrode includes magnesium, a magnesium alloy, or a magnesium compound.

[C16] The secondary battery according to any one of [C01] to [C15], including a positive electrode using sulfur, graphite fluoride, a metal oxide, or a metal halide as a positive electrode active material.

[C17] The secondary battery according to [C16], in which a metal constituting the metal oxide or the metal halide is scandium, titanium, vanadium, chromium, manganese, iron, cobalt, nickel, copper, zinc, or molybdenum.

### [D01] <<Battery pack>>

A battery pack including a secondary battery, a control unit for controlling the secondary battery, and an exterior enclosing the secondary battery, in which the secondary battery is the secondary battery according to any one of [C01] to [C17].

### [D02] <<Electronic device>>

An electronic device for receiving power supplied from a secondary battery, in which
the secondary battery is the secondary battery according to any one of [C01] to [C17].

### [D03] <<Electric vehicle>>

An electric vehicle including a conversion device for converting power supplied from a secondary battery into a driving force of the vehicle, and a control device for performing information processing on vehicle control on the basis of information on the secondary battery, in which

the secondary battery is the secondary battery according to any one of [C01] to [C17].

### [D04] «Power system»

A power system configured to receive power supplied from a secondary battery and/or to supply power from a power source to the secondary battery, in which
the secondary battery is the secondary battery according to any one of [C01] to [C17].

### [D05] <<Power storage power source>>

A power storage power source including a secondary battery and configured to be connected to an electronic device to which power is supplied, in which
the secondary battery is the secondary battery according to any one of [C01] to [C17].

### [E01] <<Plating bath>>

A plating bath including a sulfone and a magnesium salt dissolved in the sulfone, in which
the magnesium salt includes a halide (molecule containing a halogen) of magnesium, and
has a moisture content of more than 10 ppm and less than 500 ppm.

[E02] The plating bath according to [E01], in which the halide (molecule containing a halogen) includes MgX₂ (X = Cl, Br, or I).

[E03] A plating bath including a sulfone and a magnesium salt dissolved in the sulfone, in which
the magnesium salt includes at least one magnesium salt selected from the group consisting of magnesium borohydride, magnesium perchlorate, magnesium nitrate, magnesium sulfate, magnesium tetrafluoroborate, magnesium tetraphenyl borate, magnesium hexafluorophosphate, magnesium hexafluoroarsenate, magnesium perfluoroalkylsulfonate, magnesium tetraphenylborate, magnesium perfluoroalkylsulfonylimide, and magnesium hexaalkyl disilazide, and
the plating bath has a moisture content of more than 10 ppm and less than 500 ppm.

[E04] The plating bath according to any one of [E01] to [E03], in which the sulfone is an alkylsulfone represented by R₁R₂SO₂ (in which R₁ and R₂ each represent an alkyl group) or an alkylsulfone derivative.

[E05] The plating bath according to [E04], in which the alkylsulfone is at least one alkylsulfone selected from the group consisting of dimethylsulfone, methylethylsulfone, methyl-n-propylsulfone, methyl-i-propylsulfone, methyl-n-butylsulfone, methyl-i-butylsulfone, methyl-s-butylsulfone, methyl-t-butylsulfone, ethylmethylsulfone, diethylsulfone, ethyl-n-propylsulfone, ethyl-i-propylsulfone, ethyl-n-butylsulfone, ethyl-i-butylsulfone, ethyl-s-butylsulfone, ethyl-t-butylsulfone, di-n-propylsulfone, di-i-propylsulfone, n-propyl-n-butylsulfone, n-butylethylsulfone, i-butylethylsulfone, s-butylethylsulfone, and di-n-butylsulfone, and the alkyl sulfone derivative is ethylphenylsulfone.

[E06] The plating bath according to any one of [E01] to [E05], including an additive.

[E07] The plating bath according to [E06], in which the additive includes a salt in which a metal ion includes a cation of at least one atom or atomic group selected from the group consisting of aluminum (Al), beryllium (Be), boron (B), gallium (Ga), indium (In), silicon (Si), tin (Sn), titanium (Ti), chromium (Cr), iron (Fe), cobalt (Co), and lanthanum (La), or
the additive includes a salt including at least one atom, organic group, or anion selected from the group consisting of a hydrogen atom, an alkyl group, an alkenyl group, an aryl group, a benzyl group, an amide group, a fluorine ion (F⁻), a chlorine ion (Cl⁻), a bromine ion (Br⁻) , an iodine ion (I⁻), a perchlorate ion (ClO₄⁻), a hexafluoroborate ion (BF₄⁻), a hexafluorophosphate ion (PF₆⁻), a hexafluoroarsenate ion (AsF₆⁻), a perfluoroalkyl sulfonate ion (R_{f1}SO₃⁻) <in which R_{f1} is a perfluoroalkyl group>, and a perfluoroalkyl sulfonyl imide ion ((R_{f2}SO₂)₂N⁻ <in which R_{f2} is a perfluoroalkyl group>.

[E08] The plating bath according to any one of [E01] to [E07], further containing a nonpolar solvent.

[E09] The plating bath according to [E08], in which the nonpolar solvent has a dielectric constant and the number of donors of 20 or less.

[E10] The plating bath according to [E08] or [E09], in which the nonpolar solvent includes at least one nonpolar solvent selected from the group consisting of an aromatic hydrocarbon, an ether, a ketone, an ester, and a chain carbonate.

[E11] The plating bath according to [E10], in which
the aromatic hydrocarbon is toluene, benzene, o-xylene, m-xylene, p-xylene, or 1-methylnaphthalene,
the ether is diethyl ether or tetrahydrofuran,
the ketone is 4-methyl-2-pentanone,
the ester is methyl acetate or ethyl acetate, and
the chain carbonate is dimethyl carbonate, diethyl carbonate, or ethyl methyl carbonate.

### REFERENCE SIGNS LIST

10 Coin battery
21 Coin battery can
22 Gasket
23 Positive electrode
24 Separator
25 Negative electrode
26 Spacer
27 Coin battery lid
31 Positive electrode
32 Negative electrode
33 Separator
35, 36 Current collector
37 Gasket
41 Porous positive electrode
42 Negative electrode
43 Separator and electrolytic solution
44 Air electrode side current collector
45 Negative electrode side current collector
46 Diffusion layer
47 Oxygen selective permeable film
48 Exterior body
51 Air (atmosphere)
52 Oxygen
61 Positive electrode
62 Positive electrode electrolytic solution
63 Positive electrode electrolytic solution transport pump
64 Fuel flow path
65 Positive electrode electrolytic solution storage container
71 Negative electrode
72 Negative electrode electrolytic solution
73 Negative electrode electrolytic solution transport pump
74 Fuel flow path
75 Negative electrode electrolytic solution storage container
66 Ion exchange film
100 Magnesium secondary battery
111 Electrode structure housing member (battery can)
112, 113 Insulating plate
114 Battery lid
115 Safety valve mechanism
115A Disk plate
116 Positive temperature coefficient element (PTC element)
117 Gasket
118 Center pin
121 Electrode structure
122 Positive electrode
123 Positive electrode lead portion
124 Negative electrode
125 Negative electrode lead portion
126 Separator
200 Exterior member
201 Adhesive film
221 Electrode structure
223 Positive electrode lead portion
225 Negative electrode lead portion
1001 Cell (assembled battery)
1002 Magnesium secondary battery
1010 Control unit
1011 Memory
1012 Voltage measuring unit
1013 Current measuring unit
1014 Current detection resistor
1015 Temperature measuring unit
1016 Temperature detection element
1020 Switch control unit
1021 Switch unit
1022 Charge control switch
1024 Discharge control switch
1023, 1025 Diode
1031 Positive electrode terminal
1032 Negative electrode terminal
CO, DO Control signal
2000 Housing
2001 Control unit
2002 Various sensors
2003 Power source
2010 Engine
2011 Power generator
2012, 2013 Inverter
2014 Driving motor
2015 Differential device
2016 Transmission
2017 Clutch
2021 Front wheel drive shaft
2022 Front wheel
2023 Rear wheel drive shaft
2024 Rear wheel
3000 House
3001 Control unit
3002 Power source
3003 Smart meter
3004 Power hub
3010 Electrical device (electronic device)
3011 Electric vehicle
3021 Private power generator
3022 Centralized power system
4000 Tool body
4001 Control unit
4002 Power source
4003 Drill portion

## Claims

1. An electrolytic solution for an electrochemical device including a negative electrode including a magnesium-based material, having a moisture content of more than 10 ppm and less than 500 ppm.

2. The electrolytic solution according to claim 1, wherein the moisture content is more than 10 ppm and 300 ppm or less.

3. The electrolytic solution according to claim 1, comprising a sulfone and a magnesium salt dissolved in the sulfone.

4. The electrolytic solution according to claim 3, wherein the magnesium salt includes MgXₙ (in which n is 1 or 2, and X is a monovalent or divalent anion).

5. The electrolytic solution according to claim 4, wherein X includes a molecule containing a halogen, -SO₄, -NO₃, or a hexaalkyldisiazide group.

6. The electrolytic solution according to claim 5, wherein the molecule containing a halogen includes MgX₂ (X = Cl, Br, or I).

7. The electrolytic solution according to claim 3, wherein the sulfone is an alkylsulfone represented by R₁R₂SO₂ (in which R₁ and R₂ each represent an alkyl group) or an alkylsulfone derivative.

8. The electrolytic solution according to claim 7, wherein the alkylsulfone is at least one alkylsulfone selected from the group consisting of dimethylsulfone, methylethylsulfone, methyl-n-propylsulfone, methyl-i-propylsulfone, methyl-n-butylsulfone, methyl-i-butylsulfone, methyl-s-butylsulfone, methyl-t-butylsulfone, ethylmethylsulfone, diethylsulfone, ethyl-n-propylsulfone, ethyl-i-propylsulfone, ethyl-n-butylsulfone, ethyl-i-butylsulfone, ethyl-s-butylsulfone, ethyl-t-butylsulfone, di-n-propylsulfone, di-i-propylsulfone, n-propyl-n-butylsulfone, n-butylethylsulfone, i-butylethylsulfone, s-butylethylsulfone, and di-n-butylsulfone, and the alkyl sulfone derivative is ethylphenylsulfone.

9. The electrolytic solution according to claim 1, comprising an ether and a magnesium salt dissolved in the ether.

10. The electrolytic solution according to claim 9, wherein the magnesium salt includes Mg(AlCl₃R¹)₂ or Mg(AlCl₂R²R³)₂ (in which R¹, R², and R³ are each an alkyl group) .

11. The electrolytic solution according to claim 9, wherein the ether includes a cyclic ether or a linear ether.

12. The electrolytic solution according to claim 11, wherein
the cyclic ether is at least one cyclic ether selected from the group consisting of tetrahydrofuran, dioxolane, dioxane, an epoxide, and a furan, and
the linear ether is dialkyl glycol ether.

13. An electrochemical device comprising a negative electrode including a magnesium-based material,
including an electrolytic solution having a moisture content of more than 10 ppm and less than 500 ppm.

14. The electrochemical device according to claim 13, wherein the moisture content is more than 10 ppm and 300 ppm or less.

15. The electrochemical device according to claim 13, wherein the electrolytic solution contains a sulfone and a magnesium salt dissolved in the sulfone.

16. The electrochemical device according to claim 13, wherein the electrolytic solution contains an ether and a magnesium salt dissolved in the ether.

17. The electrochemical device according to claim 13, wherein the electrochemical device is a battery having an electrolyte layer constituted by the electrolytic solution.
